# EUROPEAN PATENT APPLICATION

(11) **EP 4 276 954 A1**
(43) Date of publication of application: **15.11.2023**
(21) Application number: 21969657.2
(22) Date of filing: 31.12.2021
(51) Int. Cl.: H01M 4/587, H01M 4/62, C01B 32/05

(54) **HARD CARBON, PREPARATION METHOD FOR HARD CARBON, SECONDARY BATTERY CONTAINING HARD CARBON, AND ELECTRIC APPARATUS**

(71) Applicant: Contemporary Amperex Technology Co., Limited, Ningde, Fujian 352100 (CN)
(72) Inventor: CHEN, Xiaoxia, Ningde, Fujian 352100 (CN); ZHANG, Xinxin, Ningde, Fujian 352100 (CN); OUYANG, Chuying, Ningde, Fujian 352100 (CN); GUO, Yongsheng, Ningde, Fujian 352100 (CN); TIAN, Jiarui, Ningde, Fujian 352100 (CN); ZHENG, Xiaoji, Ningde, Fujian 352100 (CN); MA, Yu, Ningde, Fujian 352100 (CN); LIU, Ben, Ningde, Fujian 352100 (CN)
(74) Representative: Jacob, Reuben Ellis
(86) International application number: PCT/CN2021/143482
(87) International publication number: WO 2023/123300

(57) **Abstract**

Provided in the present application are hard carbon, a preparation method for hard carbon, a secondary battery containing hard carbon, and an electric apparatus. The amount of CO₂ generated that is measured in a temperature-programmed desorption mass spectrum (TPD-MS) of the hard carbon from 50°C up to 1050°C is less than or equal to 1.0 mmoL/g, and the amount of CO generated that is measured is less than or equal to 2.0 mmoL/g. By means of the present application, both the capacity and the initial coulombic efficiency of hard carbon can be improved.

## Description

### Technical Field

The present application relates to the technical field of batteries, and specifically relates to a hard carbon, a method for preparing the same, a secondary battery comprising the same, and an electrical apparatus comprising the same.

### Background Art

In recent years, secondary batteries are widely applied in energy storage power source systems, such as water, fire, wind, and solar power stations, as well as many fields, such as electric tools, electric bicycles, electric motorcycles, electric vehicles, military equipment, and aerospace. With the application and promotion of the secondary batteries, their energy density, service life and rate performance have attracted more and more attention. Graphite is a most commonly used negative electrode active material for secondary batteries, but has a theoretical gram capacity of only 372 mAh/g and a very limited space for improving the energy density. Further, graphite has a small interlayer spacing, and limited improvement on the rate performance. As a novel negative electrode active material, a hard carbon is capable achieving rapid intercalation and deintercalation of active ions during the charge-discharge of the secondary batteries, and therefore has a very broad development prospect. However, the hard carbon has low capacity and low first coulomb efficiency, thus having limited improvement on the energy density, service life, and rate performance of the secondary batteries.

### Summary of the Invention

An object of the present application is to provide a hard carbon, a method for preparing the same, a secondary battery comprising the same, and an electrical apparatus comprising the same, so as to improve both capacity and first coulomb efficiency of the hard carbon.

A first aspect of the present application provides a hard carbon, where an amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

Compared with the currently commercialized hard carbon, the hard carbon in the present application achieves both high capacity and high first coulomb efficiency. While the mechanism is still unclear, the inventor of the present application infers that a possible reason is that the main resource of CO₂ and CO detected in TPD-MS of the hard carbon material is an oxygen-containing functional group (for example, phenolic group, ether group, quinonyl, carbonyl, anhydride, ester group, hydroxyl, or carboxyl) in the hard carbon structure. In the present application, the contents of CO₂ and CO generated in the TPD-MS test process are controlled (equivalent to controlling the content of the oxygen-containing functional group in the hard carbon structure), thereby reducing the probability of bonding of the oxygen-containing functional group to active ions, and reducing the irreversible consumption of the active ions. Thus, the hard carbon in the present application can achieve both high capacity and high first coulomb efficiency. Further, the content of the oxygen-containing functional group in the hard carbon structure is controlled within a specific range to further guarantee an appropriate amount of defects in the hard carbon material structure. These defects can serve as transport channels of active ions inside the hard carbon, thereby reducing the proportion of non-intercalatable regions of the active ions inside the hard carbon, improving the utilization of active ion reaction sites in the hard carbon structure, facilitating smooth intercalation of the active ions in the body structure of the hard carbon material, and further improving the capacity and the first coulomb efficiency of the hard carbon.

In any embodiment of the present application, the amount of generated CO₂ is detected in thermal programmed desorption-mass spectrum (TPD-MS) to be from 0.2 mmoL/g to 1.0 mmoL/g, and optionally to be from 0.4 mmoL/g to 0.8 mmoL/g, when the hard carbon is heated from 50 °C to 1,050 °C. In this case, the hard carbon can have higher capacity, higher first coulomb efficiency, longer service life, and better rate performance.

In any embodiment of the present application, the amount of generated CO is detected in thermal programmed desorption-mass spectrum (TPD-MS) to be from 0.5 mmoL/g to 2.0 mmoL/g, and optionally to be from 0.8 mmoL/g to 1.4 mmoL/g, when the hard carbon is heated from 50 °C to 1,050 °C. In this case, the hard carbon can have higher capacity, higher first coulomb efficiency, longer service life, and better rate performance.

In any embodiment of the present application, an amount of generated H₂ is detected in thermal programmed desorption-mass spectrum (TPD-MS) to be less than or equal to 1.0 mmoL/g, and optionally to be from 0.5 mmoL/g to 1.0 mmoL/g, when the hard carbon is heated from 50 °C to 1,050 °C. H₂ is mainly derived from the C-H bond breakage in the hard carbon structure. The hard carbon structure in the present application has a small number of C-H bonds, the active ions stored in the hard carbon structure may be easily deintercalated, and the voltage hysteresis phenomenon is capable of being greatly inhibited. Therefore, the hard carbon in the present application can have higher capacity, higher first coulomb efficiency, longer service life, and better rate performance.

In any embodiment of the present application, based on a total mass of the hard carbon, a percentage mass content of C element in the hard carbon is from 95% to 98%.

In any embodiment of the present application, based on the total mass of the hard carbon, a percentage mass content of O element in the hard carbon is less than or equal to 5%.

In any embodiment of the present application, based on the total mass of the hard carbon, a percentage mass content of H element in the hard carbon is less than or equal to 0.4%. The hard carbon in the present application comprises a low content of H element. Therefore, the hard carbon structure comprises a small number of C-H bonds, and the active ions may be easily deintercalated, such that the hard carbon in the present application can achieve both high capacity and high first coulomb efficiency.

In any embodiment of the present application, based on the total mass of the hard carbon, a percentage mass content of N element in the hard carbon is less than or equal to 0.4%.

In any embodiment of the present application, based on the total mass of the hard carbon, a sum of the percentage mass content of the C element, the percentage mass content of the O element, the percentage mass content of the H element, and the percentage mass content of the N element in the hard carbon is from 99.0% to 99.8%.

The hard carbon in the present application comprises a low content of heteroatoms. Therefore, the heteroatoms have low irreversible consumption of the active ions, and then the hard carbon in the present application can achieve both high capacity and high first coulomb efficiency.

In any embodiment of the present application, in a Raman spectrum of the hard carbon, I_{d}/I_{g} is from 1.2 to 1.3, where I_{d} represents d peak intensity of a Raman shift in a range of 1,350±50 cm⁻¹, and I_{g} represents g peak intensity of the Raman shift in a range of 1,580±50 cm⁻¹. The hard carbon of the present application satisfies the I_{d}/I_{g} of 1.2-1.3. At this time, the order degree of the hard carbon structure is moderate, so that the hard carbon has higher capacity and higher first Coulomb efficiency at the same time, and also has a longer longer service life and better rate performance.

In any embodiment of the present application, in an X-ray diffraction pattern of the hard carbon, a 2θ value corresponding to peak 002 is between 22° and 24°.

In any embodiment of the present application, a volumetric particle size Dv50 of the hard carbon is from 2 µm to 15 µm; and is optionally from 4 µm to 8 µm.

In any embodiment of the present application, a volumetric particle size Dv90 of the hard carbon is from 5 µm to 25 µm; and is optionally from 8 µm to 15 µm.

In any embodiment of the present application, the volumetric particle size Dv50 of the hard carbon is from 4 µm to 8 µm, and the volumetric particle size Dv90 of the hard carbon is from 8 µm to 15 µm.

The volumetric particle size Dv50 and/or Dv90 of the hard carbon within an appropriate range contributes to improving the transport performance of active ions and electrons, thereby further improving the rate performance of the hard carbon.

In any embodiment of the present application, a specific surface area of the hard carbon is less than or equal to 5 m²/g; and is optionally from 0.5 m²/g to 5 m²/g. When the specific surface area of the hard carbon is within an appropriate range, the hard carbon not only can have both higher capacity and higher first coulomb efficiency, but also can have longer service life and better rate performance. In addition, when the specific surface area of the hard carbon is within the appropriate range, the hard carbon can further have a strong bonding force to a binder, thereby improving the cohesion and bonding force of a negative electrode sheet, reducing the volume expansion of the negative electrode sheet in the cycle process, and making the secondary battery have better cycling performance.

In any embodiment of the present application, a powder compaction density of the hard carbon under a force of 50,000 N is from 0.96 g/cm³ to 1.05 g/cm³. When the powder compaction density of the hard carbon is within an appropriate range, the compaction density of the negative electrode sheet can be improved, thereby improving the energy density of the secondary battery.

In any embodiment of the present application, a tap density of the hard carbon is from 0.80 g/cm³ to 0.95 g/cm³. When the tap density of the hard carbon is within an appropriate range, the compaction density of the negative electrode sheet can be improved, thereby improving the energy density of the secondary battery.

A second aspect of the present application provides a method for preparing a hard carbon, including the following steps: S10: providing a carbon source; S20: heat treating the carbon source in an inert atmosphere at a first temperature T1 for a duration of t1 to obtain a first intermediate product; S30: heat treating the resulting first intermediate product in an oxygen-containing atmosphere with an oxygen volume fraction greater than or equal to 25% at a second temperature T2 for a duration of t2 to obtain a second intermediate product; and S40: carbonizing the resulting second intermediate product in an inert atmosphere at a third temperature T3 for a duration of t3 to obtain the hard carbon, where an amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

The inventor was surprised to find that the hard carbon obtained through a low-temperature heat treatment process in an inert atmosphere, two low-temperature heat treatment processes in an oxygen-containing atmosphere, and a high-temperature carbonization process in an inert atmosphere of the carbon source is capable of having both high capacity and high first coulomb efficiency. Compared with the existing commercialized hard carbon, the hard carbon obtained in accordance with the preparation method in the present application has obviously improved capacity and first coulomb efficiency.

The method for preparing a hard carbon provided in the present application is simple and adapted to commercial production. The method for preparing a hard carbon provided in the present application neither needs to additionally add a conductive agent, nor needs to additionally add other adjuvants, so that the hard carbon obtained in accordance with the preparation method provided in the present application has a lower content of heteroatoms, and is capable of reducing irreversible consumption of the heteroatoms on active ions.

In any embodiment of the present application, T1<T3, and T2<T3.

In any embodiment of the present application, T1≤T2; and optionally, T1<T2.

In any embodiment of the present application, T1≤300 °C. Optionally, T1 is from 180 °C to 300 °C. When T1 within an appropriate range, a framework structure of the carbon source can be better stabilized, and a more stable skeleton structure can be provided for a pore forming process in subsequent high-temperature carbonization, thus reducing the formation of highly active structure defects, further being capable of reducing the number of H and oxygen-containing functional groups in the formed graphite microcrystalline structure, and improving the utilization of graphite microcrystalline wafers as active ion reaction sites.

In any embodiment of the present application, T2<400 °C. Optionally, T2 is from 270 °C to 380 °C. When T2 is within an appropriate range, an appropriate amount of oxygen-containing functional groups is capable of being introduced on a stable skeleton structure. These oxygen-containing functional groups are connected to precursors of adjacent graphite microcrystalline wafers mainly by way of covalent bonds, thereby being capable of maintaining an appropriate interlayer spacing between the graphite microcrystalline wafers formed during the subsequent high-temperature carbonization, facilitating reversible deintercalation of the active ions without excessively inhibiting the merging and reforming of the graphite microcrystalline wafers, thus minimizing the highly active structure defective sites in the hard carbon, maintaining the amounts of generated CO₂, CO, and H₂ at a low level, and guaranteeing that the hard carbon has both high capacity and high first coulomb efficiency.

In any embodiment of the present application, T3 is from 1,000 °C to 1,600 °C. Optionally, T3 is from 1,000 °C to 1,400 °C. When T3 is within an appropriate range, the interlayer spacing of the graphite microcrystals can be improved, and the degree of order of the resulting hard carbon can be improved, such that the hard carbon has both high capacity and high first coulomb efficiency.

In any embodiment of the present application, t1 is from 4 h to 60 h.

In any embodiment of the present application, t2 is from 1 h to 12 h.

In any embodiment of the present application, t3 is from 1 h to 12 h.

In any embodiment of the present application, the oxygen volume fraction in the oxygen-containing atmosphere is from 25% to 100%. Optionally, the oxygen volume fraction in the oxygen-containing atmosphere is from 30% to 80%.

In any embodiment of the present application, the inert atmosphere is selected from one or more of a nitrogen atmosphere and an argon atmosphere.

In any embodiment of the present application, after S20 and prior to S30, the preparation method further includes: S21: crushing the resulting first intermediate product, to guarantee full contact between the first intermediate product and oxygen in subsequent treatment.

In any embodiment of the present application, after S30 and prior to S40, the preparation method further includes: S31: crushing the second intermediate product obtained in S30. Optionally, a volumetric particle size of the crushed second intermediate product satisfies: Dv50 is from 2 µm to 15 µm, and/or, Dv90 is from 5 µm to 25 µm.

In any embodiment of the present application, the carbon source includes one or more of a polymer, a resin, and a biomass material.

In any embodiment of the present application, the polymer includes one or more of polyaniline and polypyrrole.

In any embodiment of the present application, the resin includes one or more of a phenolic resin and an epoxy resin.

In any embodiment of the present application, the biomass material includes one or more of starch, glucose, fructose, maltose, sucrose, cellulose, hemicellulose, and lignin. Optionally, the starch includes one or more of cereal starch, tuber starch, and bean starch.

A third aspect of the present application provides a secondary battery, comprising a negative electrode sheet, where the negative electrode sheet comprises the hard carbon in the first aspect of the present application or the hard carbon prepared in accordance with the method in the second aspect of the present application.

A fourth aspect of the present application provides an electrical apparatus, comprising the secondary battery in the third aspect of the present application.

The electrical apparatus in the present application comprises the secondary battery provided in the present application, and thus has at least the same advantages as the secondary battery.

### Description of Drawings

In order to more clearly illustrate the technical solutions in embodiments of the present application, the accompanying drawings to be used in the embodiments of the present application will be briefly introduced below. Apparently, the drawings described below are merely some embodiments of the present application. For those of ordinary skills in the art, other drawings may also be obtained based on these drawings without making creative work.
Fig. 1 is a schematic diagram of a secondary battery in an embodiment of the present application.
Fig. 2 is a schematic exploded view of the secondary battery shown in Fig. 1 in an embodiment.
Fig. 3 is a schematic diagram of a battery module in an embodiment of the present application.
Fig. 4 is a schematic diagram of a battery pack in an embodiment of the present application.
Fig. 5 is a schematic exploded view of the battery pack shown in Fig. 4 in an embodiment.
Fig. 6 is a schematic diagram of an electrical apparatus comprising the secondary battery in the present application as a power source in an embodiment.
Fig. 7 is a scanning electron micrograph (SEM) of a hard carbon prepared in Embodiment 1.
Fig. 8 is a test diagram of a molecular weight (m/z) 2, a molecular weight (m/z) 28, and a molecular weight (m/z) 44 obtained by TPD-MS analysis of a hard carbon prepared in Embodiment 2, where curve I represents the molecular weight (m/z) 44, curve II represents the molecular weight (m/z) 28, and curve III represents the molecular weight (m/z) 2.
Fig. 9 is a test diagram of a molecular weight (m/z) 2, a molecular weight (m/z) 28, and a molecular weight (m/z) 44 obtained by TPD-MS analysis of a hard carbon prepared in Comparative Embodiment 1, where curve I represents the molecular weight (m/z) 44, curve II represents the molecular weight (m/z) 28, and curve III represents the molecular weight (m/z) 2.

In the drawings, the figures may not be drawn to the actual scale.

### Detailed Description

Embodiments of a hard carbon, a method for preparing the same, a secondary battery comprising the same, and an electrical apparatus comprising the same in the present application are specifically disclosed in detail below properly with reference to the detailed description of the drawings. However, there will be cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if a range of 60-120 and 80-110 is listed for a particular parameter, it is understood that a range of 60-110 and 80-120 is also expected. Additionally, if the minimum range values 1 and 2 are listed, and if the maximum range values 3, 4, and 5 are listed, the following ranges are all contemplated: 1 to 3, 1 to 4, 1 to 5, 2 to 3, 2 to 4 and 2 to 5. In the present application, unless stated otherwise, the numerical range "a-b" represents an abbreviated representation of any combination of real numbers between a to b, wherein both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, reference to the method may further include step (c), indicating that step (c) may be added to the method in any order, e.g., the method may include steps (a), (b), and (c), or may include steps (a), (c), and (b), or may include steps (c), (a), and (b).

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).

Unless otherwise specially noted, the term "active ion" in the present application refers to an ion that can be intercalated and deintercalated back and forth between positive and negative electrodes of a secondary battery, including but not limited to a lithium ion, a sodium ion, and the like.

Secondary battery, also known as a rechargeable battery or storage battery, refers to a battery that can be re-used by activating its active material by charging after the battery is discharged. In general, the secondary battery comprises a positive electrode sheet, a negative electrode sheet, a separator, and an electrolyte. During charge-discharge of the battery, active ions are intercalated and deintercalated back and forth between the positive electrode sheet and the negative electrode sheet. The separator is arranged between the positive electrode sheet and the negative electrode sheet, mainly to serve for preventing short circuit between the positive and negative electrodes, and making the active ions pass through. The electrolyte serves for conducting the active ions between the positive electrode sheet and the negative electrode sheet. At present, secondary batteries are widely applied in energy storage power source systems, such as water, fire, wind, and solar power stations, as well as many fields, such as electric tools, electric bicycles, electric motorcycles, electric vehicles, as military equipment, and aerospace.

With the application and promotion of the secondary batteries, their energy density, service life and rate performance have attracted more and more attention. The performance of a negative electrode active material determines the energy density, service life, and safety of the secondary batteries to a certain extent. Graphite (classified into natural graphite and artificial graphite) is a most commonly used negative electrode active material for secondary batteries, but has a theoretical gram capacity of only 372 mAh/g and a very limited space for improving the energy density. Further, graphite has a small interlayer spacing and limited improvement of the rate performance, thereby failing to satisfy the actual requirements of secondary batteries with high rate performance.

Hard carbon refers to a carbon that is ungraphitizable, and is still ungraphitizable even at a high temperature of above 2,500 °C. The hard carbon is a kind of carbon material having a complex structure and presenting a graphite microcrystalline structure, in which the graphite microcrystal is irregularly arranged with a small number of graphite microcrystalline wafers, and edges of the wafers may be cross-linked. The hard carbon structure further includes an amorphous region, where the amorphous region mainly includes micropores, defects, sp3-hybridized carbon atoms, carbon chains, some functional groups, and the like. Therefore, a plurality of active ion reaction sites may be present in the hard carbon structure, e.g., graphite microcrystalline surface, graphite microcrystalline interlayer, graphite microcrystalline wafer edge, and micropores.

Compared with the graphite, the hard carbon has a larger interlayer spacing and a more abundant micropore structure, thereby contributing to the rapid intercalation and deintercalation of the active ions, such that the secondary battery has outstanding low-temperature performance, power performance, and safety performance, and especially in the field of power batteries, the hard carbon has unique advantages. However, at present, most commercialized hard carbon belongs to a low-capacity ordinary hard carbon with low capacity and low first coulomb efficiency, for example, the capacity is usually between 200 mAh/g and 280 mAh/g, and the first coulomb efficiency is usually lower than 80%, thereby resulting in severe restrictions on its practical application.

Therefore, how to improve both the capacity and the first coulomb efficiency of the hard carbon is still a technical problem to be urgently solved at present.

### Hard carbon

In view of this, the first aspect of the embodiments of the present application provides a hard carbon, which can achieve both high capacity and high first coulomb efficiency, and enables the secondary battery to have high energy density, long service life, and outstanding rate performance.

An amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon in the first aspect of the embodiments of the present application is heated from 50 °C to 1,050 °C.

TPD-MS analysis may be carried out under the following conditions: a certain mass of sample is placed in a sample tube, and is heated from 50 °C to 1,050 °C in a gas flow state of argon or helium at a heating rate from 1 °C/min to 20 °C/min; continuous quantitative analysis of the generated gas is conducted using a mass spectrometer; and it is considered that, in the detected emitted gas, a substance with a molecular weight (m/z) of 2 is H₂, a substance with a molecular weight (m/z) of 28 is CO, and a substance with a molecular weight (m/z) of 44 is CO₂. After the test is completed, the amount of generated different gases is obtained by time integral of a MS curve obtained by the mass spectrometer, and the resulting amount of generated gases divided by the sample mass is the amount of gases generated by a unit mass of the hard carbon in the present application.

An example test method includes the following steps: calibrating the mass spectrometer using H₂ (molecular weight (m/z) 2), CO (molecular weight (m/z) 28), and CO₂ (molecular weight (m/z) 44); placing 100 mg of sample in a sample tube, insufflating argon at a flow rate from 10 ml/min to 50 ml/min for 30 min for purging and gas replacement, then starting a heating apparatus while keeping argon flowing, heating from 50 °C to 1,050 °C at a heating rate of 10 °C/min, and performing continuous quantitative analysis on the gas generated in the heating process using a mass spectrometer.

Compared with the currently commercialized hard carbon, the hard carbon in the present application achieves both high capacity and high first coulomb efficiency. While the mechanism is still unclear, the inventor of the present application infers that a possible reason is that the main resource of CO₂ and CO detected in TPD-MS of the hard carbon material is an oxygen-containing functional group (for example, phenolic group, ether group, quinonyl, carbonyl, anhydride, ester group, hydroxyl, or carboxyl) in the hard carbon structure. In the present application, the contents of CO₂ and CO generated in the TPD-MS test process are controlled (equivalent to controlling the content of the oxygen-containing functional group in the hard carbon structure), thereby reducing the probability of bonding of the oxygen-containing functional group to active ions, and reducing the irreversible consumption of the active ions. Thus, the hard carbon in the present application can achieve both high capacity and high first coulomb efficiency. Further, the content of the oxygen-containing functional group in the hard carbon structure is controlled within a specific range to further guarantee an appropriate amount of defects in the hard carbon material structure. These defects can serve as transport channels of active ions inside the hard carbon, thereby reducing the proportion of non-intercalatable regions of the active ions inside the hard carbon, improving the utilization of active ion reaction sites in the hard carbon structure, facilitating smooth intercalation of the active ions in the body structure of the hard carbon material, and further improving the capacity and the first coulomb efficiency of the hard carbon.

In some Embodiments, the amount of generated CO₂ is detected in thermal programmed desorption-mass spectrum (TPD-MS) to be ≤0.9 mmoL/g, ≤0.8 mmoL/g, ≤0.7 mmoL/g, ≤0.6 mmoL/g, ≤0.5 mmoL/g, or ≤0.4 mmoL/g, when the hard carbon is heated from 50 °C to 1,050 °C.

In some Embodiments, the amount of generated CO is detected in thermal programmed desorption-mass spectrum (TPD-MS) to be ≤1.9 mmoL/g, ≤1.8 mmoL/g, ≤1.7 mmoL/g, ≤1.6 mmoL/g, ≤1.5 mmoL/g, ≤1.4 mmoL/g, ≤1.3 mmoL/g, ≤1.2 mmoL/g, ≤1.1 mmoL/g, ≤1.0 mmoL/g, ≤0.9 mmoL/g, ≤0.8 mmoL/g, ≤0.7 mmoL/g, or ≤0.6 mmoL/g, when the hard carbon is heated from 50 °C to 1,050 °C.

In some Embodiments, the amount of generated CO₂ is detected in thermal programmed desorption-mass spectrum (TPD-MS) to be further greater than or equal to 0.2 mmoL/g, when the hard carbon is heated from 50 °C to 1,050 °C. For example, the amount of generated CO₂ is 0.2 mmoL/g-1.0 mmoL/g, 0.2 mmoL/g-0.9 mmoL/g, 0.2 mmoL/g-0.8 mmoL/g, 0.2 mmoL/g-0.7 mmoL/g, 0.2 mmoL/g-0.6 mmoL/g, 0.2 mmoL/g-0.5 mmoL/g, 0.3 mmoL/g-1.0 mmoL/g, 0.3 mmoL/g-0.9 mmoL/g, 0.3 mmoL/g-0.8 mmoL/g, 0.3 mmoL/g-0.7 mmoL/g, 0.3 mmoL/g-0.6 mmoL/g, 0.3 mmoL/g-0.5 mmoL/g, 0.4 mmoL/g-1.0 mmoL/g, 0.4 mmoL/g-0.9 mmoL/g, 0.4 mmoL/g-0.8 mmoL/g, 0.4 mmoL/g-0.7 mmoL/g, 0.4 mmoL/g-0.6 mmoL/g, 0.4 mmoL/g-0.5 mmoL/g, 0.5 mmoL/g-1.0 mmoL/g, 0.5 mmoL/g-0.9 mmoL/g, 0.5 mmoL/g-0.8 mmoL/g, 0.5 mmoL/g-0.7 mmoL/g, 0.5 mmoL/g-0.6 mmoL/g, 0.6 mmoL/g-1.0 mmoL/g, 0.6 mmoL/g-0.9 mmoL/g, 0.6 mmoL/g-0.8 mmoL/g, 0.6 mmoL/g-0.7 mmoL/g, 0.7 mmoL/g-1.0 mmoL/g, 0.7 mmoL/g-0.9 mmoL/g, or 0.7 mmoL/g-0.8 mmoL/g. In this case, the hard carbon can have higher capacity, higher first coulomb efficiency, longer service life, and better rate performance.

In some Embodiments, the amount of generated CO is detected in thermal programmed desorption-mass spectrum (TPD-MS) to be further greater than or equal to 0.5 mmoL/g, when the hard carbon is heated from 50 °C to 1,050 °C. For example, the amount of generated CO is 0.5 mmoL/g-2.0 mmoL/g, 0.5 mmoL/g-1.8 mmoL/g, 0.5 mmoL/g-1.6 mmoL/g, 0.5 mmoL/g-1.4 mmoL/g, 0.5 mmoL/g-1.2 mmoL/g, 0.5 mmoL/g-1.0 mmoL/g, 0.5 mmoL/g-0.8 mmoL/g, 0.5 mmoL/g-0.6 mmoL/g, 0.6 mmoL/g-2.0 mmoL/g, 0.6 mmoL/g-1.8 mmoL/g, 0.6 mmoL/g-1.6 mmoL/g, 0.6 mmoL/g-1.4 mmoL/g, 0.6 mmoL/g-1.2 mmoL/g, 0.6 mmoL/g-1.0 mmoL/g, 0.6 mmoL/g-0.8 mmoL/g, 0.8 mmoL/g-2.0 mmoL/g, 0.8 mmoL/g-1.8 mmoL/g, 0.8 mmoL/g-1.6 mmoL/g, 0.8 mmoL/g-1.4 mmoL/g, 0.8 mmoL/g-1.2 mmoL/g, 0.8 mmoL/g-1.0 mmoL/g, 1.0 mmoL/g-2.0 mmoL/g, 1.0 mmoL/g-1.8 mmoL/g, 1.0 mmoL/g-1.6 mmoL/g, 1.0 mmoL/g-1.4 mmoL/g, 1.0 mmoL/g-1.2 mmoL/g, 1.2 mmoL/g-2.0 mmoL/g, 1.2 mmoL/g-1.8 mmoL/g, 1.2 mmoL/g-1.6 mmoL/g, 1.2 mmoL/g-1.4 mmoL/g, 1.4 mmoL/g-2.0 mmoL/g, 1.4 mmoL/g-1.8 mmoL/g, 1.4 mmoL/g-1.6 mmoL/g, 1.6 mmoL/g-2.0 mmoL/g, or 1.6 mmoL/g-1.8 mmoL/g. In this case, the hard carbon can have higher capacity, higher first coulomb efficiency, longer service life, and better rate performance.

In some embodiments, the amount of generated H₂ is detected in thermal programmed desorption-mass spectrum (TPD-MS) to be less than or equal to 1.0 mmoL/g, and optionally to be 0.5 mmoL/g-1.0 mmoL/g, 0.5 mmoL/g-0.9 mmoL/g, 0.5 mmoL/g-0.8 mmoL/g, 0.5 mmoL/g-0.7 mmoL/g, 0.5 mmoL/g-0.6 mmoL/g, 0.6 mmoL/g-1.0 mmoL/g, 0.6 mmoL/g-0.9 mmoL/g, 0.6 mmoL/g-0.8 mmoL/g, 0.6 mmoL/g-0.7 mmoL/g, 0.7 mmoL/g-1.0 mmoL/g, 0.7 mmoL/g-0.9 mmoL/g, or 0.7 mmoL/g-0.8 mmoL/g, when the hard carbon is heated from 50 °C to 1,050 °C. H₂ is mainly derived from the C-H bond breakage in the hard carbon structure. The hard carbon structure in the present application has a small number of C-H bonds, the active ions stored in the hard carbon structure may be easily deintercalated, and the voltage hysteresis phenomenon is capable of being greatly inhibited. Therefore, the hard carbon in the present application can have higher capacity, higher first coulomb efficiency, longer service life, and better rate performance.

In some embodiments, based on a total mass of the hard carbon, a percentage mass content of C element in the hard carbon is from 95% to 98%.

In some embodiments, based on the total mass of the hard carbon, a percentage mass content of O element in the hard carbon is less than or equal to 5%.

In some embodiments, based on the total mass of the hard carbon, a percentage mass content of H element in the hard carbon is less than or equal to 0.4%. The hard carbon in the present application comprises a low content of H element. Therefore, the hard carbon structure comprises a small number of C-H bonds, and the active ions may be easily deintercalated, such that the hard carbon in the present application can achieve both high capacity and high first coulomb efficiency.

In some embodiments, based on the total mass of the hard carbon, a percentage mass content of N element in the hard carbon is less than or equal to 0.4%.

In some embodiments, based on the total mass of the hard carbon, a sum of the percentage mass content of the C element, the percentage mass content of the O element, the percentage mass content of the H element, and the percentage mass content of the N element in the hard carbon is from 99.0% to 99.8%.

In some embodiments, based on the total mass of the hard carbon, the percentage mass content of the C element in the hard carbon is from 95% to 98%, the percentage mass content of the O element in the hard carbon is less than or equal to 5%, the percentage mass content of the H element in the hard carbon is less than or equal to 0.4%, the percentage mass content of the N element in the hard carbon is less than or equal to 0.4%, and the sum of the percentage mass contents of the C, O, H, and N elements in the hard carbon is from 99.0% to 99.8%.

The hard carbon in the present application comprises a low content of heteroatoms. Therefore, the heteroatoms have low irreversible consumption of the active ions, and then the hard carbon in the present application can achieve both high capacity and high first coulomb efficiency.

In some embodiments, in a Raman spectrum of the hard carbon, I_{d}/I_{g} is from 1.2 to 1.3, where I_{d} represents d peak intensity of a Raman shift in a range of 1,350±50 cm⁻¹, and I_{g} represents g peak intensity of the Raman shift in a range of 1,580±50 cm⁻¹, where a laser wavelength λ is 532 nm.

The d peak is caused by a lattice defect of carbon atoms, and the g peak is caused by in-plane vibration of sp2 carbon atoms. In the hard carbon structure, the d peak intensity is associated with the number of defects in the hard carbon structure, and the g peak intensity is associated with the number of graphite microcrystals in the hard carbon structure. Therefore, I_{d}/I_{g} may represent a degree of order of the hard carbon structure. The smaller the I_{d}/I_{g} is, the higher the degree of order of the hard carbon structure is, and the higher the integrity of the carbon plane is. the first coulomb efficiency of the hard carbon is increased, but its capacity becomes lowered, and its rate performance becomes worsened. The I_{d}/I_{g} of the hard carbon in the present application is from 1.2 to 1.3. In this case, the hard carbon structure has a moderate degree of order, such that the hard carbon not only has both higher capacity and higher first coulomb efficiency, but also has longer service life and better rate performance.

In some embodiments, in an X-ray diffraction pattern of the hard carbon, a 2θ value corresponding to peak 002 is between 22° and 24°.

In some embodiments, a specific surface area of the hard carbon is less than or equal to 5 m²/g. Optionally, the specific surface area of the hard carbon may be 0.1 m²/g-5 m²/g, 0.5 m²/g-5 m²/g, 1 m²/g-5 m²/g, 1.5 m²/g-5 m²/g, 2 m²/g-5 m²/g, 2.5 m²/g-5 m²/g, 3 m²/g-5 m²/g, 3.5 m²/g-5 m²/g, 4 m²/g-5 m²/g, 0.5 m²/g-4 m²/g, 1 m²/g-4 m²/g, 1.5 m²/g-4 m²/g, 2 m²/g-4 m²/g, 2.5 m²/g-4 m²/g, 3 m²/g-4 m²/g, 0.5 m²/g-3 m²/g, 1 m²/g-3 m²/g, 1.5 m²/g-3 m²/g, or 2 m²/g-3 m²/g. A lower specific surface area contributes to reducing the surface activity of the hard carbon, and reducing the formation of a SEI film, thus improving the first coulomb efficiency of the hard carbon and the secondary battery; while a higher specific surface area contributes to accelerating the transport of active ions, thus improving the rate performance of the secondary battery. When the specific surface area of the hard carbon is within an appropriate range, the hard carbon not only can have both higher capacity and higher first coulomb efficiency, but also can have longer service life and better rate performance. In addition, when the specific surface area of the hard carbon is within the appropriate range, the hard carbon can further have a strong bonding force to a binder, thereby improving the cohesion and bonding force of a negative electrode sheet, reducing the volume expansion of the negative electrode sheet in the cycle process, and making the secondary battery have better cycling performance.

In some embodiments, a volumetric particle size Dv50 of the hard carbon is from 2 µm to 15 µm; and is optionally from 4 µm to 8 µm.

In some embodiments, a volumetric particle size Dv90 of the hard carbon is from 5 µm to 25 µm; and is optionally from 8 µm to 15 µm.

In some embodiments, the volumetric particle size Dv50 of the hard carbon is from 4 µm to 8 µm, and the volumetric particle size Dv90 of the hard carbon is from 8 µm to 15 µm.

The volumetric particle size Dv50 and/or Dv90 of the hard carbon within an appropriate range contributes to improving the transport performance of active ions and electrons, thereby further improving the rate performance of the hard carbon.

In some embodiments, a powder compaction density of the hard carbon under a force of 50,000 N is from 0.96 g/cm³ to 1.05 g/cm³. When the powder compaction density of the hard carbon is within an appropriate range, the compaction density of the negative electrode sheet can be improved, thereby improving the energy density of the secondary battery.

In some embodiments, a tap density of the hard carbon is from 0.80 g/cm³ to 0.95 g/cm³. When the tap density of the hard carbon is within an appropriate range, the compaction density of the negative electrode sheet can be improved, thereby improving the energy density of the secondary battery.

In some embodiments, the amount of generated CO₂ is detected in thermal programmed desorption-mass spectrum (TPD-MS) to be from 0.2 mmoL/g to 1.0 mmoL/g, the amount of generated CO is detected in thermal programmed desorption-mass spectrum to be from 0.5 mmoL/g to 2.0 mmoL/g, and the amount of generated H₂ is detected in thermal programmed desorption-mass spectrum to be from 0.5 mmoL/g to 1.0 mmoL/g, when the hard carbon is heated from 50 °C to 1,050 °C.

In some embodiments, the amount of generated CO₂ is detected in thermal programmed desorption-mass spectrum (TPD-MS) to be from 0.4 mmoL/g to 0.8 mmoL/g, the amount of generated CO is detected in thermal programmed desorption-mass spectrum to be less than or equal to 0.8 mmoL/g to 1.4 mmoL/g, and the amount of generated H₂ is detected in thermal programmed desorption-mass spectrum to be from 0.5 mmoL/g to 1.0 mmoL/g, when the hard carbon is heated from 50 °C to 1,050 °C.

In the present application, Autochem II 2920 gas analyzing apparatus of Micrometrics Instruments Corporation and Hiden HPR-20 R&D mass spectrometer of Hiden Analytical Ltd. may be used for TPD-MS analysis.

In the present application, the specific surface area of the hard carbon may be determined using ASAP 3020 surface area and pore size analyzer of Micrometrics Instruments Corporation using the specific surface area analysis and test method by nitrogen adsorption with reference to GB/T 19587-2017, and may be computed using the BET (Brunauer Emmett Teller) method.

In the present application, the volumetric particle sizes Dv50 and Dv90 of the hard carbon have well-known meanings in the art, represent the corresponding particle sizes when the cumulative volume distribution percentage of the material reaches 50% and 90% respectively, and may be determined using known instruments and methods in the art, for example, may be conveniently determined using a laser particle size analyzer, such as Mastersizer 2000E laser particle size analyzer of Malvern Instruments Ltd, by referring to GB/T 19077-2016 Particle size analysis-laser diffraction methods.

In the present application, the powder compaction density of the hard carbon has a well-known meaning in the art, and may be determined using known instruments and methods in the art, for example, may be determined using an electronic pressure testing machine (e.g., UTM7305) by referring to the standard GB/T24533-2009. An example test method is as follows: 1 g of hard carbon powder is weighed, added into a mold with a base area of 1.327 cm², pressurized to 5,000 kg (equivalent to 50,000 N), kept under this pressure for 30 s, then depressurized, and kept under this pressure for 10 s. Then, the powder compaction density of the hard carbon under the force of 50,000N is recorded and computed.

In the present application, the tap density of the hard carbon has a well-known meaning in the art, and may be determined using known instruments and methods in the art, for example, may be determined using a powder tap density tester (e.g., BT-301 of Dandong Better) by referring to GB/T 5162-2006.

In the present application, the element content of the hard carbon has a well-known meaning in the art, and may be determined using known instruments and methods in the art, for example, determined by X-ray photoelectron spectroscopy (XPS).

### Method for preparing hard carbon

The second aspect of the embodiments of present application provides a method for preparing a hard carbon, including the following steps: S10: providing a carbon source; S20: heat treating the carbon source in an inert atmosphere at a first temperature T1 for a duration of t1 to obtain a first intermediate product; S30: heat treating the resulting first intermediate product in an oxygen-containing atmosphere with an oxygen volume fraction greater than or equal to 25% at a second temperature T2 for a duration of t2 to obtain a second intermediate product; and S40: carbonizing the resulting second intermediate product in an inert atmosphere at a third temperature T3 for a duration of t3 to obtain the hard carbon. An amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

The preparation method in the second aspect of the embodiments of the present application is capable of being used for preparing the hard carbon in any one embodiment in the first aspect of the embodiments of the present application.

In some embodiments, T1<T3, and T2<T3.

In some embodiments, T1≤T2. Optionally, T1<T2.

The inventor was surprised to find that the hard carbon obtained through a low-temperature heat treatment process in an inert atmosphere, two low-temperature heat treatment processes in an oxygen-containing atmosphere, and a high-temperature carbonization process in an inert atmosphere of the carbon source is capable of having both high capacity and high first coulomb efficiency. Compared with the existing commercialized hard carbon, the hard carbon obtained in accordance with the preparation method in the present application has obviously improved capacity and first coulomb efficiency.

The method for preparing a hard carbon provided in the present application is simple and adapted to commercial production.

The method for preparing a hard carbon provided in the present application neither needs to additionally add a conductive agent, nor needs to additionally add other adjuvants, so that the hard carbon obtained in accordance with the preparation method provided in the present application has a lower content of heteroatoms, and is capable of reducing irreversible consumption of the heteroatoms on active ions.

In the method for preparing a hard carbon in the present application, heat treatment of the carbon source in an inert atmosphere at a low first temperature is capable of better stabilizing the framework structure of the carbon source, and providing a stable skeleton structure for a pore forming process in subsequent high-temperature carbonization; two low-temperature heat treatments of the first intermediate product in an oxygen-containing atmosphere at a low second temperature is capable of introducing an appropriate amount of oxygen-containing functional groups, which are connected to precursors of adjacent graphite microcrystalline wafers mainly by way of covalent bonds, thereby being capable of maintaining an appropriate interlayer spacing between the graphite microcrystalline wafers formed during the subsequent high-temperature carbonization, and facilitating reversible deintercalation of the active ions without excessively inhibiting the merging and reforming of the graphite microcrystalline wafers; and high-temperature carbonization of the second intermediate product in an inert atmosphere at a high third temperature can improve the degree of order of the resulting hard carbon.

In some embodiments, the oxygen volume fraction in the oxygen-containing atmosphere is from 25% to 100%. There shall not be a very high oxygen volume fraction in the oxygen-containing atmosphere. When there is a high oxygen volume fraction in the oxygen-containing atmosphere, a chemical reaction between a large number of support skeletons in the structure of the resulting first intermediate product and oxygen will occur, thus resulting in escape in the form of small molecules, e.g., CO₂ and CO. A small number of oxygen-containing functional groups are introduced on the skeleton material, and these small number of oxygen-containing functional groups cannot effectively inhibit mutual approaching of the adjacent graphite microcrystalline wafers in the subsequent high-temperature heat treatment process, thereby resulting in failure to intercalate active ions in a portion of graphite microcrystals due to a very small interlayer spacing, and further reducing the capacity of the hard carbon.

In some embodiments, the oxygen-containing atmosphere is a mixed atmosphere of oxygen and an inert atmosphere. Optionally, the oxygen volume fraction in the oxygen-containing atmosphere is 25%-80%, 30%-80%, 40%-80%, 50%-80%, 25%-70%, 30%-70%, 40%-70%, 50%-70%, 25%-60%, 30%-60%, 40%-60%, 25%-50%, or 30%-50%.

In the present application, types of the inert atmosphere are not particularly limited. In some embodiments, the inert atmosphere is selected from one or more of a nitrogen atmosphere and an argon atmosphere.

In some embodiments, the heating rate in S20 may be from 1 °C/min to 10 °C/min. However, in the present application, the heating rate is not limited to this, and may be adjusted based on actual requirements. For example, the heating rate is 1 °C/min-9 °C/min, 1 °C/min-8 °C/min, 1 °C/min-7 °C/min, 1 °C/min-6 °C/min, 1 °C/min-5 °C/min, 1 °C/min-4 °C/min, 1 °C/min-3 °C/min, 1 °C/min-2 °C/min, 2 °C/min-10 °C/min, 3 °C/min-9 °C/min, 4 °C/min-8 °C/min, or 5 °C/min-7 °C/min.

In some embodiments, the first temperature T1≤300 °C. High first temperature T1 tends to cause a large number of molecular chains inside the carbon source to break during heat treatment, thus introducing a large number of structure defects formed by atomic deletion into the skeleton structure. Structure defects on a basal surface and partial end surface of the graphite microcrystal are not bonded to hydrogen, but will react with, e.g., O₂ and H₂O in the air due to high activity at a moment when the hard carbon is discharged after the preparation is completed, thus introducing a large number of oxygen-containing functional groups into the resulting hard carbon; functional groups, such as carboxyl, carbonyl, and quinonyl, are mainly introduced into the end surface of the graphite microcrystal in the hard carbon, and functional groups, such as hydroxyl and ether group, are mainly introduced into the basal surface of the graphite microcrystal in the hard carbon, where the carboxyl functional group mainly increases the amount of generated CO₂, while the carbonyl, quinonyl, hydroxyl, and ether group mainly increase the amount of generated CO. The oxygen-containing functional groups introduced after the preparation is completed cannot reversibly release the active ions after bonding to the active ions, thereby resulting in low first coulomb efficiency of the resulting hard carbon; and will further result in complex chemical composition and high thickness of the SEI film formed on the surface of the hard carbon, thereby failing to contribute to desolvation of the active ions, and resulting in low capacity of the resulting hard carbon.

Further, the first temperature T1 should not be very low. When the first temperature T1 is low, the heat treated carbon source has a low cross-linking degree, and the formed skeleton structure has low chemical stability. When the second low-temperature heat treatment is carried out in an oxygen-containing atmosphere, a large number of chemical bonds in the skeleton structure will still break and form a large number of structure defects, thereby resulting in a high number of H and oxygen-containing functional groups in the graphite microcrystalline structure formed during the high-temperature carbonization. Therefore, when the first temperature T1 is low, the amount of generated CO₂, CO, and H₂ in TPD-MS analysis of the resulting hard carbon will be increased to a certain extent, and the capacity and the first coulomb efficiency of the resulting hard carbon will be decreased to a certain extent.

In some embodiments, the first temperature T1 may be 180 °C-300 °C, 200 °C-300 °C, 220 °C-300 °C, 240 °C-300 °C, 260 °C-300 °C, 280 °C-300 °C, 180 °C-280 °C, 200 °C-280 °C, 220 °C-280 °C, 240 °C-280 °C, 260 °C-280 °C, 180 °C-260 °C, 200 °C-260 °C, 220 °C-260 °C, 240 °C-260 °C, 180 °C-240 °C, 200 °C-240 °C, 220 °C-240 °C, or 180 °C-220 °C. When the first temperature T1 is within an appropriate range, a framework structure of the carbon source can be better stabilized, and a more stable skeleton structure can be provided for a pore forming process in subsequent high-temperature carbonization, thus reducing the formation of highly active structure defects, further being capable of reducing the number of Hand oxygen-containing functional groups in the formed graphite microcrystalline structure, and improving the utilization of graphite microcrystalline wafers as active ion reaction sites. Therefore, when the first temperature T1 is within an appropriate range, the resulting hard carbon can have both high capacity and high first coulomb efficiency.

In some embodiments, the heat treatment time t1 is from 4 h to 60 h. Those skilled in the art may select appropriate heat treatment time within the above range based on the employed first temperature. For example, when the first temperature is high, the heat treatment time may be appropriately shortened. Based on different types of carbon sources, the heat treatment time is slightly different, and may be adjusted by those skilled in the art based on actual requirements.

In some embodiments, the heating rate in S30 may be from 1 °C/min to 5 °C/min. However, in the present application, the heating rate is not limited to this, and may be adjusted based on actual requirements. For example, the heating rate is 1 °C/min-4 °C/min, 1 °C/min-3 °C/min, 1 °C/min-2 °C/min, 2 °C/min-5 °C/min, 2 °C/min-4 °C/min, 2 °C/min-3 °C/min, 3 °C/min-5 °C/min, 3 °C/min-4 °C/min, or 4 °C/min-5 °C/min.

In some embodiments, the second temperature T2<400 °C. When the second temperature T2 is very high, a chemical reaction between a large number of support skeletons in the structure of the first intermediate product obtained in S20 and oxygen will occur, thus resulting in escape in the form of small molecules, such as CO₂ and CO. Therefore, many structure defects will be introduced into the resulting hard carbon structure, thereby resulting in a large number of H and oxygen-containing functional groups in the formed graphite microcrystalline structure. Further, the amount of generated CO₂, CO, and H₂ in TPD-MS analysis of the hard carbon will be increased to a certain extent, and the capacity and the first coulomb efficiency of the hard carbon will be decreased to a certain extent. Further, the second temperature T2 should not be very low. When the second temperature T2 is low, a small number of oxygen-containing functional groups are introduced into the skeleton material, and these small number of oxygen-containing functional groups cannot effectively inhibit mutual approaching of the adjacent graphite microcrystalline wafers in the subsequent high-temperature heat treatment process, thereby resulting in failure to intercalate active ions in a portion of graphite microcrystals due to a very small interlayer spacing. Therefore, the capacity of the hard carbon will also be reduced to a certain extent.

In some embodiments, the second temperature T2 may be 200 °C-400 °C, 220 °C-400 °C, 240 °C-400 °C, 260 °C-400 °C, 280 °C-400 °C, 300 °C-400 °C, 320 °C-400 °C, 340 °C-400 °C, 360 °C-400 °C, 200 °C-380 °C, 220 °C-380 °C, 240 °C-380 °C, 260 °C-380 °C, 270 °C-350 °C, 270 °C-380 °C, 280 °C-380 °C, 290 °C-380 °C, 290 °C-350 °C, 300 °C-380 °C, 320 °C-380 °C, 340 °C-380 °C, 360 °C-380 °C, 200 °C-360 °C, 220 °C-360 °C, 240 °C-360 °C, 260 °C-360 °C, 280 °C-360 °C, 300 °C-360 °C, 320 °C-360 °C, 200 °C-340 °C, 220 °C-340 °C, 240 °C-340 °C, 260 °C-340 °C, 280 °C-340 °C, 300 °C-340 °C, 200 °C-320 °C, 220 °C-320 °C, 240 °C-320 °C, 260 °C-320 °C, 280 °C-320 °C, 200 °C-300 °C, 220 °C-300 °C, 240 °C-300 °C, 260 °C-300 °C, 200 °C-280 °C, 220 °C-280 °C, 240 °C-280 °C, 200 °C-260 °C, 220 °C-260 °C, or 200 °C-240 °C. When the second temperature T2 is within an appropriate range, an appropriate amount of oxygen-containing functional groups is capable of being introduced on a stable skeleton structure. These oxygen-containing functional groups are connected to precursors of adjacent graphite microcrystalline wafers mainly by way of covalent bonds, thereby being capable of maintaining an appropriate interlayer spacing between the graphite microcrystalline wafers formed during the subsequent high-temperature carbonization, facilitating reversible deintercalation of the active ions without excessively inhibiting the merging and reforming of the graphite microcrystalline wafers, thus minimizing the highly active structure defective sites in the hard carbon, maintaining the amounts of generated CO₂, CO, and H₂ at a low level, and guaranteeing that the hard carbon has both high capacity and high first coulomb efficiency.

In some embodiments, the heat treatment time t2 is from 1 h to 12 h. Those skilled in the art may select appropriate heat treatment time within the above range based on the employed second temperature and oxygen concentration. For example, when the second temperature is high or the oxygen concentration is high, the heat treatment time may be appropriately shortened. Based on different types of carbon sources, the heat treatment time is slightly different, and may be adjusted by those skilled in the art based on actual requirements.

In some embodiments, optionally, when T2≤270 ° C, t2≥ 10 h; and further, when 200 °C≤T2≤270 °C, 10 h≤t2≤ 12 h.

In some embodiments, optionally, when 270 ° C<T2<400 ° C, t2 ≤ 8 h; and further, when 270 °C<T2<400 °C, 1 h≤t2≤8 h.

In some embodiments, 270 ° C≤T2≤380 °C, and 1 h<,t2<,4 h. When both are within the given ranges, the capacity and the first coulomb efficiency of the hard carbon are capable of being further improved.

In some embodiments, the heating rate in S40 is from 1 °C/min to 10 °C/min. However, in the present application, the heating rate is not limited to this, and may be adjusted based on actual requirements. For example, the heating rate is 1 °C/min-9 °C/min, 1 °C/min-8 °C/min, 1 °C/min-7 °C/min, 1 °C/min-6 °C/min, 1 °C/min-5 °C/min, 1 °C/min-4 °C/min, 1 °C/min-3 °C/min, 1 °C/min-2 °C/min, 2 °C/min-10 °C/min, 3 °C/min-9 °C/min, 4 °C/min-8 °C/min, or 5 °C/min-7 °C/min.

In some embodiments, the third temperature T3 is from 1,000 °C to 1,600 °C. When the third temperature T3 is low, a large number of highly active structure defects introduced into the structure of the second intermediate product obtained in S30 cannot be effectively reduced at a low heat treatment temperature, so that the graphite mirocrystal comprises a large number of oxygen-containing functional groups that is capable of being decomposed to produce CO₂, CO, and H₂, and then the capacity and the first coulomb efficiency of the resulting hard carbon will be reduced to a certain extent. Further, the third temperature T3 should not be very high. A high third temperature T3 will greatly drive the adjacent graphite microcrystalline wafers to approach each other; and in addition, when the third temperature T3 is high, micromotion of the graphite microcrystal tends to occur, while the support effect of the oxygen-containing functional groups introduced in S30 between the adjacent graphite microcrystalline wafers is not enough to resist the micromotion of the graphite microcrystal, finally resulting in the reduction of the interlayer spacing between a portion of graphite microcrystalline wafers and the failure to intercalate the active ions, such that the capacity of the resulting hard carbon is decreased to a certain extent.

In some embodiments, the third temperature T3 may be 1,100 °C-1,600 °C, 1,200 °C-1,600 °C, 1,300 °C-1,600 °C, 1,400 °C-1,600 °C, 1,500 °C-1,600 °C, 1,000 °C-1,500 °C, 1,100 °C-1,500 °C, 1,200 °C-1,500 °C, 1,300 °C-1,500 °C, 1,400 °C-1,500 °C, 1,000 °C-1,350 °C, 1,000 °C-1,400 °C, 1,100 °C-1,400 °C, 1,200 °C-1,400 °C, 1,300 °C-1,400 °C, 1,000 °C-1,300 °C, 1,100 °C-1,300 °C, 1,200 °C-1,300 °C, 1,000 °C-1,200 °C, 1,100 °C-1,200 °C, or 1,000 °C-1,100 °C. When the third temperature T3 is within an appropriate range, the interlayer spacing of the graphite microcrystals can be improved, and the degree of order of the resulting hard carbon can be improved, such that the hard carbon has both high capacity and high first coulomb efficiency.

In some embodiments, the heat treatment time t3 is from 1 h to 12 h. Those skilled in the art may select appropriate heat treatment time within the above range based on the employed third temperature. For example, when the third temperature is high, the heat treatment time may be appropriately shortened. Based on different types of carbon sources, the heat treatment time is slightly different, and may be adjusted by those skilled in the art based on actual requirements.

In some embodiments, the method for preparing a hard carbon may further include a crushing step, to prevent a large amount of hard carbon from agglomeration during the preparation process, and contribute to obtaining a hard carbon meeting the required size.

In the method for preparing a hard carbon in the present application, the crushing needs to be carried out prior to the high-temperature carbonization. This is because when the resulting hard carbon is crushed after the high-temperature carbonization is completed, many fresh surfaces of the hard carbon will be exposed. The fresh surfaces tend to react with, e.g., O₂ and H₂O in the air, thereby introducing a large number of oxygen-containing functional groups in the resulting hard carbon, and then reducing the capacity and the first coulomb efficiency of the resulting hard carbon. The crushing may be crushing the first intermediate product and/or the second intermediate product.

In some embodiments, after S20 and prior to S30, the preparation method further includes: S21: crushing the resulting first intermediate product, e.g., to mm level, such that agglomerated first intermediate product may be crushed, to guarantee full contact between the first intermediate product and oxygen in subsequent treatment. Of course, in some embodiments, this step may be omitted.

In some embodiments, after S30 and prior to S40, the preparation method further includes: S31: crushing the second intermediate product obtained in S30. For example, in some embodiments, a volumetric particle size Dv50 of the crushed second intermediate product is from 2 µm to 15 µm, and is optionally from 4 µm to 8 µm. In some embodiments, a volumetric particle size Dv90 of the crushed second intermediate product is from 5 µm to 25 µm; and is optionally from 8 µm to 15 µm. In some embodiments, the volumetric particle size Dv50 of the crushed second intermediate product is from 4 µm to 8 µm, and the volumetric particle size Dv90 of the crushed second intermediate product is from 8 µm to 15 µm.

In the present application, types of the carbon source are not particularly limited. In some embodiments, the carbon source includes one or more of a polymer, a resin, and a biomass material.

As an example, the polymer includes one or more of polyaniline and polypyrrole.

As an example, the resin includes one or more of a phenolic resin and an epoxy resin. Optionally, the phenolic resin includes one or more of a phenol-formaldehyde resin, a resorcinol-formaldehyde resin, a p-diphenol-formaldehyde resin, and a phenol-furfural resin.

As an example, the biomass material includes one or more of starch, glucose, fructose, maltose, sucrose, cellulose, hemicellulose, and lignin. Optionally, the starch includes one or more of cereal starch, tuber starch, and bean starch. Examples of the cereal starch may include, but are not limited to, one or more of corn starch, rice starch, millet starch, sorghum starch, wheat starch, oat starch, buckwheat starch, and rye starch. Examples of the tuber starch may include, but are not limited to, one or more of cassava starch, potato starch, sweet potato starch, yam starch, and taro starch. Examples of the bean starch may include, but are not limited to, one or more of mung bean starch, broad bean starch, pea starch, and cowpea starch.

Optionally, the carbon source is selected from the biomass material. Further, the carbon source is selected from one or more of starch, glucose, fructose, maltose, sucrose, cellulose, hemicellulose, and lignin. The above biomass material is cheap with a few kinds of heteroatoms (atoms except for O and H) and a high content of carbon element, and is capable of avoiding the influence of heteroatoms on the process for preparing a hard carbon. Further, the above biomass material is cross-linkable even at a low temperature, thereby contributing to the formation of a more stable skeleton structure, and then obtaining a hard carbon with an appropriate pore channel structure.

In the present application, the biomass material may be directly purchased, or may be extracted from a plant.

In some embodiments, the method for preparing a hard carbon includes the following steps: S10: providing a carbon source, the carbon source being a starch; S20: heat treating the carbon source in an inert atmosphere at a temperature less than or equal to 300 °C for 4 h-60 h, to obtain a first intermediate product; S30: heat treating the resulting first intermediate product in an oxygen-containing atmosphere with an oxygen volume fraction greater than or equal to 25% at a temperature of 400 °C for 1 h-12 h, to obtain a second intermediate product; and S40: carbonizing the resulting second intermediate product in an inert atmosphere at a temperature from 1,000 °C to 1,600 °C for 1 h-12 h to obtain the hard carbon. An amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

In some embodiments, the method for preparing a hard carbon includes the following steps: S10: providing a carbon source, the carbon source being a starch; S20: heat treating the carbon source in an inert atmosphere at a temperature of 300 °C for 4 h-60 h, to obtain a first intermediate product; S30: heat treating the resulting first intermediate product in an oxygen-containing atmosphere with an oxygen volume fraction greater than or equal to 25% at temperature of 400 °C for 1 h-12 h, to obtain a second intermediate product; and S40: crushing the resulting second intermediate product until a volumetric particle size Dv50 is from 2 µm to 15 µm and/or Dv90 from 5 µm to 25 µm, and then carbonizing the crushed second intermediate product in an inert atmosphere at a temperature from 1,000 °C to 1,600 °C for 1 h-12 h to obtain the hard carbon. An amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

### Secondary battery

The third aspect of the embodiments of the present application provides a secondary battery. In the present application, types of the secondary battery are not particularly limited. For example, the secondary battery may be, e.g., a lithium-ion battery or a sodium-ion battery. In particular, the secondary battery is a sodium-ion secondary battery. In general, the secondary battery comprises a positive electrode sheet, a negative electrode sheet, an electrolyte, and the like. During charge-discharge of the secondary battery, active ions are intercalated and deintercalated back and forth between the positive electrode sheet and the negative electrode sheet, and the electrolyte serves for conducting the active ions between the positive electrode sheet and the negative electrode sheet.

### [Negative electrode sheet]

In some embodiments, the negative electrode sheet comprises a negative electrode current collector and a negative electrode film layer arranged on at least one surface of the negative electrode current collector and comprising a negative electrode active material. For example, the negative electrode current collector has two surfaces opposite in its own thickness direction, and the negative electrode film layer is arranged on either one or both of the two opposite surfaces of the negative electrode current collector.

In some embodiments, the negative electrode film layer comprises at least one of the hard carbon according to any one embodiment in the first aspect of the embodiments of the present application or the hard carbon prepared in accordance with the method according to any one embodiment in the second aspect of the embodiments of the present application.

In some embodiments, the negative electrode film layer may further include other negative electrode active materials except for the hard carbon. In some embodiments, the other negative electrode active materials include, but are not limited to, at least one of natural graphite, artificial graphite, soft carbon, silicon-based material, tin-based material, and lithium titanate. The silicon-based material may include at least one of elementary silicon, silicon oxide, silicon-carbon composite, silicon-nitrogen composite, and silicon alloy material. The tin-based material may include at least one of elementary tin, tin oxide, and tin alloy material. In the present application, the negative electrode active material is not limited to these materials, and other conventional well-known materials usable for a negative electrode active material of a secondary battery may also be used.

In some embodiments, the negative electrode film layer further optionally comprises a negative electrode conductive agent. In the present application, types of the negative electrode conductive agent are not particularly limited. As an example, the negative electrode conductive agent may include at least one of superconducting carbon, conductive graphite, acetylene black, carbon black, Ketjen black, carbon dot, carbon nanotube, graphene, and carbon nanofiber. In some embodiments, based on a total mass of the negative electrode film layer, a percentage mass content of the negative electrode conductive agent is less than or equal to 5%.

In some embodiments, the negative electrode film layer further optionally comprises a negative electrode binder. In the present application, types of the negative electrode binder are not particularly limited. As an example, the negative electrode binder may comprise at least one of styrene butadiene rubber (SBR), water soluble unsaturated resin SR-1B, waterborne acrylic acid resin (e.g., polyacrylic acid (PAA), polymethacrylic acid (PMAA), or sodium polyacrylate (PAAS)), polyacrylamide (PAM), polyvinyl alcohol (PVA), sodium alginate (SA), and carboxymethyl chitosan (CMCS). In some embodiments, based on the total mass of the negative electrode film layer, a percentage mass content of the negative electrode binder is less than or equal to 5%.

In some embodiments, the negative electrode film layer further optionally comprises other adjuvants. As an example, the other adjuvants may include a thickener, e.g., sodium carboxymethyl cellulose (CMC Na) or a PTC thermistor material. In some embodiments, based on the total mass of the negative electrode film layer, a percentage mass content of the other adjuvants is less than or equal to 2%.

In some embodiments, a metal foil or a composite current collector may be used as the negative electrode current collector. As an example of the metal foil, a copper foil may be used. The composite current collector may comprise a high molecular material substrate layer and a metal material layer formed on at least one surface of the high molecular material substrate layer. As an example, the metal material may be selected from at least one of copper, copper alloy, nickel, nickel alloy, titanium, titanium alloy, silver, and silver alloy. As an example, the high molecular material substrate layer may be selected from, e.g., polypropylene (PP), polyethylene terephthalate (PET), polybutylene terephthalate (PBT), polystyrene (PS), and polyethylene (PE)).

The negative electrode film layer is generally formed by coating a negative electrode slurry on the negative electrode current collector, drying, and cold pressing. The negative electrode slurry is generally formed by dispersing the negative electrode active material, the optional conductive agent, the optional binder, and the other optional adjuvants in a solvent, and sufficiently stirring the mixture. The solvent may be, but is not limited to, N-methylpyrrolidone (NMP) or deionized water.

The negative electrode sheet does not exclude other additional functional layers except for the negative electrode film layer. For example, in some embodiments, the negative electrode sheet in the present application further includes a conductive priming coat (e.g., composed of a conductive agent and a binder) sandwiched between the negative electrode current collector and the negative electrode film layer and arranged on the surface of the negative electrode current collector. In some other embodiments, the negative electrode sheet according to the present application further comprises a protective layer covering the surface of the negative electrode film layer.

### [Positive electrode sheet]

In some embodiments, the positive electrode sheet comprises a positive electrode current collector and a positive electrode film layer arranged on at least one surface of the positive electrode current collector. For example, the positive electrode current collector has two surfaces opposite in its own thickness direction, and the positive electrode film layer is arranged on either one or both of the two opposite surfaces of the positive electrode current collector.

A metal foil or a composite current collector may be used as the positive electrode current collector. As an example of the metal foil, an aluminum foil may be used. The composite current collector may comprise a high molecular material substrate layer and a metal material layer formed on at least one surface of the high molecular material substrate layer. As an example, the metal material may be selected from one or more of aluminum, aluminum alloy, nickel, nickel alloy, titanium, titanium alloy, silver, and silver alloy. As an example, the high molecular material substrate layer may be selected from, e.g., polypropylene (PP), polyethylene terephthalate (PET), polybutylene terephthalate (PBT), polystyrene (PS), and polyethylene (PE)).

The positive electrode film layer generally comprises a positive electrode active material, an optional binder, and an optional conductive agent. The positive electrode film layer is generally formed by coating a positive electrode slurry on the positive electrode current collector, drying, and cold pressing. The positive electrode slurry is generally formed by dispersing the positive electrode active material, the optional conductive agent, the optional binder, and any other component in a solvent, and sufficiently stirring the mixture. The solvent may be, but is not limited to, N-methylpyrrolidone (NMP). As an example, the binder used for the positive electrode film layer may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. As an example, the conductive agent used for the positive electrode film layer includes one or more of superconducting carbon, conductive graphite, acetylene black, carbon black, Ketjen black, carbon dot, carbon nanotube, graphene, and carbon nanofiber.

A positive electrode active material for a secondary battery well-known in the art may be used as the positive electrode active material.

When the secondary battery in the present application is a lithium-ion battery, the positive electrode active material may comprise one or more of a lithium transition metal oxide, an olivine-structured lithium-containing phosphate, and their respective modified compounds. Examples of lithium transition metal oxides may include, but are not limited to, one or more of lithium-cobalt oxide, lithium-nickel oxide, lithium-manganese oxide, lithium-nickel-cobalt oxide, lithium-manganese-cobalt oxide, lithium-nickel-manganese-oxide, lithium-nickel-cobalt-manganese oxide, lithium-nickel-cobalt-aluminum oxide, and a modified compound thereof. Examples of olivine-structured lithium-containing phosphates may include, but are not limited to, one or more of lithium iron phosphate, lithium iron phosphate and carbon composite, lithium manganese phosphate, lithium manganese phosphate and carbon composite, lithium manganese iron phosphate, lithium manganese iron phosphate and carbon composite, and their respective modified compounds. In the present application, the positive electrode active material is not limited to these materials, and other conventional well-known materials usable for a positive electrode active material of a lithium-ion battery may also be used. These positive electrode active materials may be used alone or in combination of two or more.

In some embodiments, in order to further improve the energy density of the secondary battery, the positive electrode active material for a lithium-ion battery may comprise one or more of a lithium transition metal oxide shown in formula 1 and a modified compound thereof,

LiₐNi_{b}Co_{c}M_{d}OₑA_{f} formula 1,

in formula 1, 0.8≤a≤1.2, 0.5≤b< 1, 0<c<1, 0<d<1, 1≤e≤2, 0≤f≤1, M is selected from one or more of Mn, Al, Zr, Zn, Cu, Cr, Mg, Fe, V, Ti, and B, and A is selected from one or more of N, F, S, and Cl.

As an example, the positive electrode active material for a lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery in the present application is a sodium-ion battery, particularly a sodium-ion secondary battery, the positive electrode active material may comprise one or more of a sodium transition metal oxide, a polyanion material (e.g., phosphate, fluorophosphate, pyrophosphate, or sulphate), and a Prussian blue material. In the present application, the positive electrode active material is not limited to these materials, and other conventional well-known materials usable for a positive electrode active material of a sodium-ion battery may also be used. These positive electrode active materials may be used alone or in combination of two or more.

As an example, the positive electrode active material for a sodium-ion battery may comprise one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, or a material having a general formula of AₐM_{b}(PO₄)_{c}OₓY₃₋ₓ (where A is selected from one or more of H⁺, Li⁺, Na⁺, K⁺, and NH₄⁺; M is a transition metal cation, and is optionally one or more of V, Ti, Mn, Fe, Co, Ni, Cu, and Zn; Y is a halogen anion, and is optionally one or more of F, Cl, and Br; and 0<a≤4, 0<b≤2, 1≤c≤3, and 0≤x≤2).

In the present application, the modified compound of each of the above positive electrode active materials may be obtained by doping modification or surface coating modification of the positive electrode active material.

The positive electrode sheet in the present application does not exclude other additional functional layers except for the positive electrode film layer. For example, in some embodiments, the positive electrode sheet in the present application further includes a conductive priming coat (e.g., composed of a conductive agent and a binder) sandwiched between the positive electrode current collector and the positive electrode film layer and arranged on the surface of the positive electrode current collector. In some other embodiments, the positive electrode sheet in the present application further comprises a protective layer covering the surface of the positive electrode film layer.

### [Electrolyte]

Types of the electrolyte in the present application are not particularly limited, and may be selected based on actual requirements. For example, the electrolyte may be selected from at least one of a solid electrolyte and a liquid electrolyte (i.e., an electrolyte solution).

In some embodiments, the electrolyte solution is used as the electrolyte. The electrolyte solution comprises an electrolyte salt and a solvent.

Types of the electrolyte salt are not specifically limited, and may be selected based on actual requirements.

When the secondary battery in the present application is a lithium-ion battery, as an example, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

When the secondary battery in the present application is a sodium-ion battery, and particularly a sodium-ion secondary battery, the electrolyte salt may include one or more of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate (NaPO₂F₂), sodium difluorobis(oxalato)phosphate (NaDFOP), and sodium tetrafluoro(oxalato)phosphate (NaTFOP).

Types of the solvent are not specifically limited, and may be selected based on actual requirements. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and ethyl sulfonyl ethane (ESE).

In some embodiments, the electrolyte solution further optionally comprises an additive. For example, the additive may include a negative electrode film-forming additive, or may include a positive electrode film-forming additive, or may further include an additive that is capable of improving some performance of the battery, such as an additive that improves overcharge performance of the battery, an additive that improves high temperature performance of the battery, or an additive that improves low temperature power performance of the battery.

### [Separator]

The secondary battery using an electrolyte solution and some secondary batteries using a solid electrolyte further comprise a separator. The separator is arranged between the positive electrode sheet and the negative electrode sheet, to serve for separation. Types of the separator are not particularly limited in the present application, and may be any well-known separator with good chemical stability, good mechanical stability, and a porous structure.

In some embodiments, the material of the separator may be selected from one or more of glass fiber, non-woven cloth, polyethylene, polypropylene, and polyvinylidene fluoride. The separator may be a single-layer film, or may be a multilayer composite film. When the separator is a multilayer composite film, the materials in each layer may be identical or different.

In some embodiments, the positive electrode sheet, the separator, and the negative electrode sheet may be made into an electrode assembly by a winding process or a lamination process.

In some embodiments, the secondary battery may comprise an outer package. The outer package may be used for encapsulating the above electrode assembly and electrolyte.

In some embodiments, the outer package of the secondary battery may be a hard case, such as a hard plastic case, an aluminum case, or a steel case. The outer package of the secondary battery may also be a soft package, such as a bag-type soft package. The material of the soft package may be plastic, e.g., one or more of polypropylene (PP), polybutylene terephthalate (PBT), and polybutylene succinate (PBS).

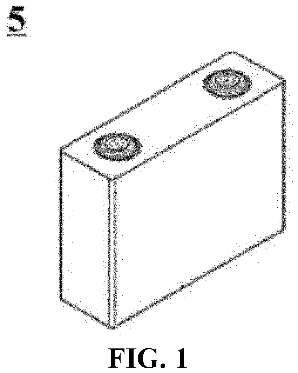

Shapes of the secondary battery are not particularly limited in the present application, and may be cylindrical, square, or any other shape. For example, Fig. 1 is a square-structured secondary battery 5 as an example.

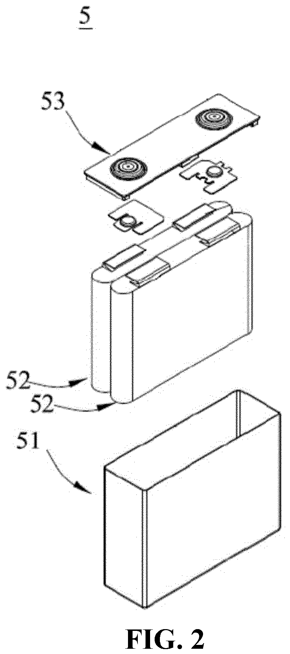

In some embodiments, as shown in Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 is used to cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity. The electrolyte solution impregnates the electrode assembly 52. One or more electrode assemblies 52 may be comprised in the secondary battery 5, and the number of electrode assemblies comprised in the secondary battery may be selected as required.

The method for preparing a secondary battery in the present application is well-known. In some examples, the positive electrode sheet, the separator, the negative electrode sheet, and the electrolyte solution may be assembled to form a secondary battery. As an example, the positive electrode sheet, the separator, and the negative electrode sheet may be made into an electrode assembly by a winding process or a lamination process. The electrode assembly is placed in the outer package, dried, then injected with the electrolyte solution, and is subjected to the processes, such as vacuum encapsulation, standing, formation, and shaping, to obtain the secondary battery.

In some embodiments of the present application, the secondary battery according to the present application may be assembled into a battery module, a plurality of secondary batteries may be comprised in the battery module, and the specific number of the secondary batteries comprised in the battery module may be adjusted based on the application and capacity of the battery module.

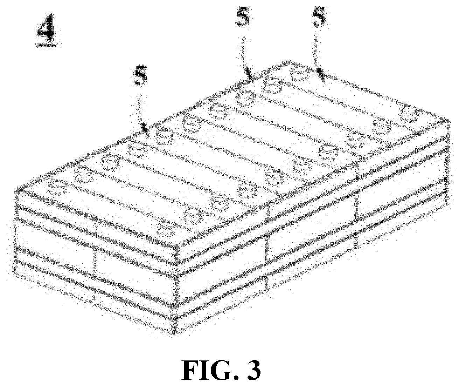

Fig. 3 is a schematic diagram of a battery module 4 as an example. As shown in Fig. 3, in the battery module 4, a plurality of secondary batteries 5 may be arranged successively along a length direction of the battery module 4, and of course, may also be arranged in any other manner. The plurality of secondary batteries 5 may further be fixed by fasteners.

Optionally, the battery module 4 can further include a shell having an accommodating space, in which the plurality of secondary batteries 5 are accommodated.

In some embodiments, the battery module may be further assembled into a battery pack, and the number of battery modules comprised in the battery pack may be adjusted based on the application and capacity of the battery pack.

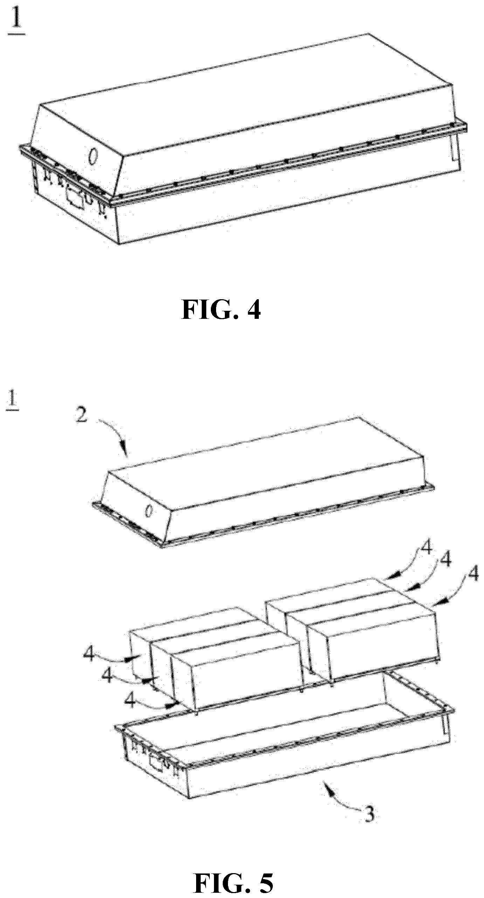

Fig. 4 and Fig. 5 are schematic diagrams of a battery pack 1 as an example. As shown in Fig. 4 and Fig. 5, the battery pack 1 may comprise a battery box and a plurality of battery modules 4 arranged in the battery box. The battery box comprises an upper box body 2 and a lower box body 3. The upper box body 2 is configured to cover the lower box body 3 and form an enclosed space for accommodating the battery module 4. The plurality of battery modules 4 may be arranged in the battery box in any manner.

### [Electrical apparatus]

An embodiment of the present application further provides an electrical apparatus. The electrical apparatus comprises at least one of the secondary battery, the battery module, or the battery pack in the present application. The secondary battery, the battery module, or the battery pack may be used as a power source of the electrical apparatus, or may be used as an energy storage unit of the electrical apparatus. The electrical apparatus may be, but is not limited to, a mobile device (such as a mobile phone, a laptop), an electric vehicle (such as an all-electric vehicle, a hybrid electric vehicle, a plug-in hybrid electric vehicle, an electric bicycle, an electric scooter, an electric golf cart, an electric truck), an electric train, a ship, a satellite, an energy storage system, etc.

The secondary battery, the battery module, or the battery pack may be selected for the electrical apparatus based on use demand thereof.

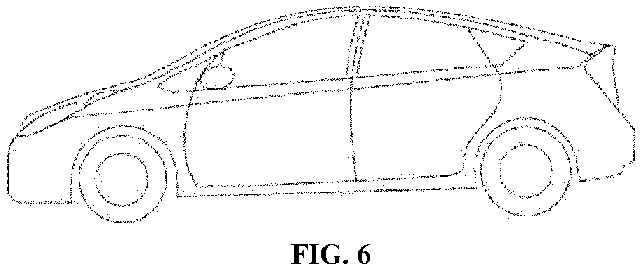

Fig. 6 is a schematic diagram of an electrical apparatus as an example. The electrical apparatus is, e.g., an all-electric vehicle, a hybrid electric vehicle, or a plug-in hybrid electric vehicle. In order to meet the requirements of the electrical apparatus for high power and high energy density, a battery pack or a battery module may be used.

As another example, the electrical apparatus may be a mobile phone, a tablet, a laptop, etc. The electrical apparatus is generally required to be light and thin, and can use a secondary battery as a power source.

### Embodiments

The following Embodiments describe the disclosure of the present application in more detail and are provided for illustrative purposes only, as various modifications and changes within the scope of the disclosure of the present application will be apparent to those skilled in the art. Unless otherwise stated, all parts, percentages, and ratios reported in the following Embodiments are on a mass basis; all reagents used in the Embodiments are commercially available or are synthesized in accordance with conventional methods, and may be directly used without further treatment; and the instruments used in the Embodiments are commercially available.

### Embodiment 1

A corn starch as a carbon source was placed in a tubular furnace, heated to 300 °C (a first temperature T1) in a nitrogen atmosphere at 5 °C/min, and then kept at this temperature for heat treatment for 18 h (heat treatment time t1) to obtain a first intermediate product. The nitrogen atmosphere was changed to a mixed atmosphere of oxygen and argon (where the oxygen volume fraction was 30% and the argon volume fraction was 70%). Then, the resulting first intermediate product was heated to 300 °C (a second temperature T2) at 3 °C/min, and then kept at this temperature for heat treatment for 2 h (heat treatment time t2) to obtain a second intermediate product. The resulting second intermediate product was crushed, until a volumetric particle size Dv50 was from 4 µm to 8 µm and Dv90 was from 8 µm to 15 µm. Then, the crushed second intermediate product was heated to 1,100 °C (a third temperature T3) in a nitrogen atmosphere at 5 °C/min, and then kept at this temperature for heat treatment for 12 h (heat treatment time t3) to obtain a hard carbon.

### Embodiments 2-23

The method for preparing a hard carbon is similar to that in Embodiment 1, except that the preparation process parameters of the hard carbon are adjusted, details as per Table 1.

### Comparative Embodiment 1

A corn starch as a carbon source was placed in a tubular furnace, heated to 240 °C in a nitrogen atmosphere at 3 °C/min, and then kept at this temperature for heat treatment for 36 h to obtain a first intermediate product. The resulting first intermediate product was crushed, until a volumetric particle size Dv50 was from 4 µm to 8 µm and Dv90 was from 8 µm to 15 µm. Then, the crushed first intermediate product was heated to 1,200 °C in a nitrogen atmosphere at 5 °C/min, and then kept at this temperature for heat treatment for 12 h to obtain a hard carbon.

### Comparative Embodiment 2

A corn starch as a carbon source was placed in a tubular furnace, heated to 240 °C in an air atmosphere at 3 °C/min, and then kept at this temperature for heat treatment for 36 h to obtain a first intermediate product. The resulting first intermediate product was crushed, until a volumetric particle size Dv50 was from 4 µm to 8 µm and Dv90 was from 8 µm to 15 µm. Then, the crushed first intermediate product was heated to 1,200 °C in a nitrogen atmosphere at 5 °C/min, and then kept at this temperature for heat treatment for 12 h to obtain a hard carbon.

### Comparative Embodiment 3

The method for preparing a hard carbon is similar to that in Embodiment 1, except that the preparation process parameters of the hard carbon are adjusted, details as per Table 1.

### Test

### (1) TPD-MS analysis of hard carbon

Autochem II 2920 gas analyzing apparatus of Micrometrics Instruments Corporation and Hiden HPR-20 R&D mass spectrometer of Hiden Analytical Ltd. were used for TPD-MS analysis of the hard carbon in each of the Embodiments and comparative Embodiments. Prior to the test, the mass spectrometer was calibrated using H₂ (molecular weight (m/z) 2), CO (molecular weight (m/z) 28), and CO₂ (molecular weight (m/z) 44).

100 mg of a hard carbon sample prepared in each of the Embodiments and comparative Embodiments was placed in a sample tube, argon was insufflated at a flow rate from 10 ml/min to 50 ml/min for 30 min for purging and gas replacement, then a heating apparatus was started while keeping argon flowing, the sample was heated from 50 °C to 1,050 °C at a heating rate of 10 °C/min, and continuous quantitative analysis on the gas generated in the heating process was performed using a mass spectrometer. In the detected emitted gas, a substance with a molecular weight (m/z) of 2 is H₂, a substance with a molecular weight (m/z) of 28 is CO, and a substance with a molecular weight (m/z) of 44 is CO₂. After the test is completed, the amount of generated different gases is obtained by time integral of a MS curve obtained by the mass spectrometer, and the resulting amount of generated gases divided by the sample mass is the amount of gases generated by a unit mass of the hard carbon.

### (2) Gram capacity and first coulomb efficiency of hard carbon

The hard carbon prepared in each of the Embodiments and comparative Embodiments, a binder styrene butadiene rubber (SBR), a thickener sodium carboxymethyl cellulose (CMC-Na), and a conductive agent carbon black were sufficiently stirred and mixed at a mass ratio of 96.2: 1.8: 1.2:0.8 in an appropriate amount of solvent deionized water, to form a homogeneous negative electrode slurry. The negative electrode slurry was homogeneously coated on the surface of the negative electrode current collector copper foil, and dried in a drying oven for later use. Ethylene carbonate (EC), ethyl methyl carbonate (EMC), and diethyl carbonate (DEC) were mixed at a volume ratio of 1:1:1 to obtain an organic solvent, and then NaPF₆ was dissolved in the organic solvent to prepare an electrolyte solution at a concentration of 1 mol/L. Then, a CR2430 button battery was assembled in a glove box protected under argon with a metal sodium sheet as a counter electrode and with a polyethylene (PE) film as a separator.

At 25 °C, first, the button battery prepared in each of the Embodiments and comparative Embodiments was discharged to 0 V at a constant current density of 10 mA/g, and the first-cycle discharge capacity of the button battery was denoted. Then, the button battery was charged to 2.0V at a constant current density of 10 mA/g, and the first-cycle charging capacity of the button battery was denoted.
Gram capacity of hard carbon (mAh/g)=first-cycle charging capacity of button battery/mass of hard carbon
First coulomb efficiency of hard carbon (%)=first-cycle charging capacity of button battery/first-cycle discharge capacity of button battery× 100%

The test results of Embodiments 1-23 and Comparative Embodiments 1-3 are shown in Table 2.

As can be seen from the test results of Embodiments 1-23, when the hard carbon meets the requirement that when the hard carbon was heated from 50 °C to 1,050 °C, an amount of generated CO₂ was detected in TPD-MS to be less than or equal to 1.0 mmoL/g and an amount of generated CO was detected in TPD-MS to be less than or equal to 2.0 mmoL/g, the hard carbon has both high capacity and high first coulomb efficiency. As can be further seen from the test results of Embodiments 1-23, when the hard carbon further meets the requirement that when the hard carbon was heated from 50 °C to 1,050 °C, an amount of generated H₂ was detected in TPD-MS to be still less than or equal to 1.0 mmoL/g, the capacity and the first coulomb efficiency of the hard carbon were further improved.

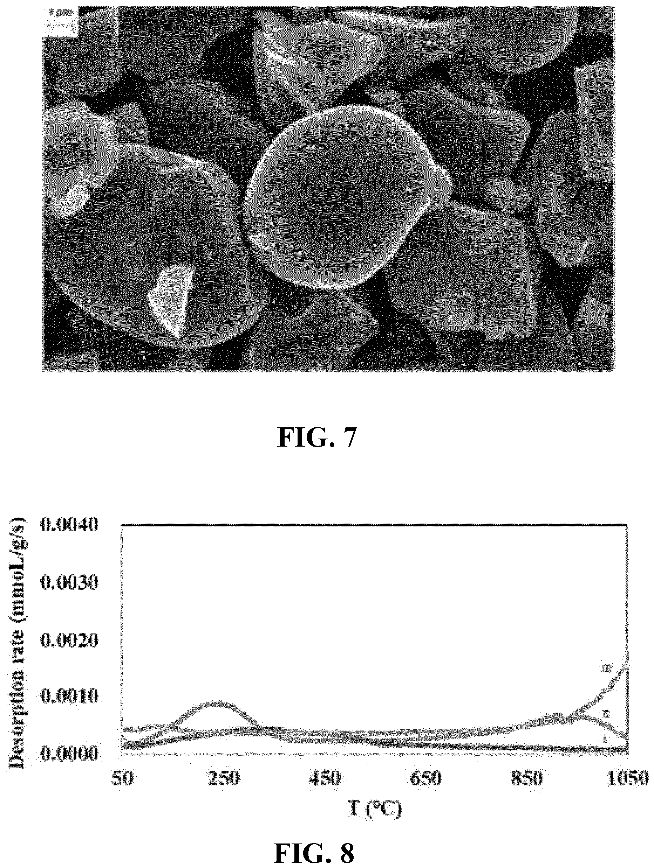

Fig. 7 is a scanning electron micrograph (SEM) of the hard carbon prepared in Embodiment 2. As can be seen from Fig. 7, the hard carbon prepared in accordance with the preparation method in the present application has a regular shape and a homogeneous size.

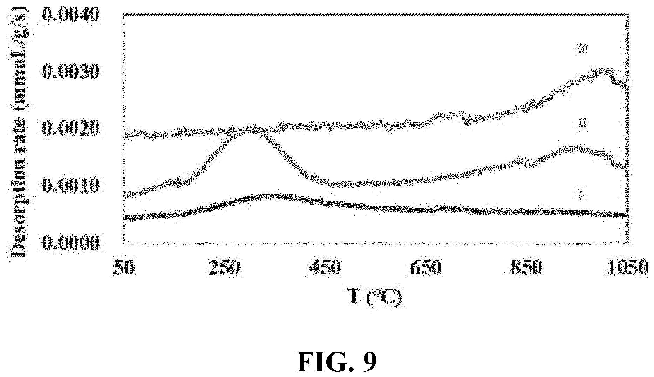

Fig. 8 and Fig. 9 are TPD-MS analysis results of the hard carbon prepared in Embodiment 2 and Comparative Embodiment 1, where curve I corresponds to a gas with a molecular weight (m/z) of 44 (i.e., CO₂), curve II corresponds to a gas with a molecular weight (m/z) of 28 (i.e., CO), and curve III corresponds to a gas with a molecular weight (m/z) of 2 (i.e., H₂).

As shown in Fig. 8, the hard carbon prepared in Embodiment 2 has an appropriate amount of generated CO₂, CO, and H₂. As can be seen from the test results in Table 2, the hard carbon prepared in Embodiment 2 has the gram capacity of 411 mAh/g, and the first coulomb efficiency of 86.4%. While the mechanism is still unclear, the inventor infers that one possible reason is that the oxygen-containing functional group in the structure of the hard carbon prepared in Embodiment 2 is at an appropriate content, and has a low probability of bonding to active ions, thus resulting in low irreversible consumption of the active ions; further, the oxygen-containing functional group at the appropriate content can further guarantee an appropriate amount of defects existing in the hard carbon structure. These defects can serve as transport channels of the active ions inside the hard carbon, thereby reducing the proportion of non-intercalatable regions of the active ions inside the hard carbon, improving the utilization of active ion reaction sites in the hard carbon structure, and facilitating smooth intercalation of the active ions in the body structure of the hard carbon material. Therefore, the hard carbon prepared in Embodiment 2 has both high capacity and high first coulomb efficiency.

The amount of generated CO₂ and/or CO was detected in the TPD-MS test of the hard carbon prepared in Comparative Embodiments 1-3 to be beyond the above range (i.e., the amount of generated CO₂ was less than or equal to 1.0 mmoL/g, and the amount of generated CO was less than or equal to 2.0 mmoL/g). Therefore, the hard carbon has both poor capacity and poor first coulomb efficiency.

In Comparative Embodiment 1, a corn starch was directly carbonized in an inert atmosphere at a high temperature after a low-temperature heat treatment process in an inert atmosphere. As shown in Fig. 9, the amount of generated CO₂ and CO of the hard carbon prepared in Comparative Embodiment 1 are beyond the above range. As can be seen from the test results in Table 2, the hard carbon prepared in Comparative Embodiment 1 has the gram capacity of only 251 mAh/g, and the first coulomb efficiency of only 77.7%.

Similarly, in Comparative Embodiment 2, a corn starch was directly carbonized in an inert atmosphere at a high temperature after a low-temperature heat treatment process in an air atmosphere. The resulting hard carbon fails to have both high gram capacity and high first coulomb efficiency.

In Comparative Embodiment 3, a corn starch was subjected to a low-temperature heat treatment process in an inert atmosphere, two low-temperature heat treatment processes in an oxygen-containing atmosphere, and a high-temperature carbonization process in an inert atmosphere, but when the third temperature T3 is very low, a large number of highly active structure defects introduced in the process for preparing a hard carbon cannot be effectively reduced, such that the formed graphite microcrystal comprises a large number of oxygen-containing functional groups, and then the hard carbon can hardly have both high gram capacity and high first coulomb efficiency.

It should be noted that the present application is not limited to the above embodiments. The above embodiments are merely exemplary, and embodiments having substantially the same technical idea and the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also encompassed within the scope of the present application.

**Table 1**

| No. | Carbon source | Low-temperature heat treatment | | | | Two low-temperature heat treatments | | | | High-temperature carbonization | | | |
|---|---|---|---|---|---|---|---|---|---|---|---|---|---|
| | | T1 (°C) | t1 (h) | Heating rate (°C/min ) | Heat treatm ent atmos phere | T2 (°C) | t2 (h) | Heating rate (°C/min) | Heat treatment atmosphere | T3 (°C) | t3 (h) | Heating rate (°C/min) | Heat treatm ent atmos phere |
| Embodi ment 1 | Corn starch | 300 | 18 | 5 | N₂ | 300 | 2 | 3 | 30%O₂+70%A r | 1,100 | 12 | 5 | N₂ |
| Embodi ment 2 | Corn starch | 240 | 36 | 3 | N₂ | 300 | 2 | 3 | 30%O₂+70%A r | 1,200 | 12 | 5 | N₂ |
| Embodi ment 3 | Corn starch | 220 | 36 | 3 | N₂ | 300 | 2 | 3 | 30%O₂+70%A r | 1,200 | 12 | 5 | N₂ |
| Embodi ment 4 | Corn starch | 180 | 60 | 3 | N₂ | 300 | 2 | 3 | 30%O₂+70%A r | 1,200 | 12 | 5 | N₂ |
| Embodi ment 5 | Corn starch | 240 | 36 | 3 | N₂ | 270 | 10 | 3 | 30%O₂+70%A r | 1,200 | 12 | 5 | N₂ |
| Embodi ment 6 | Corn starch | 240 | 36 | 3 | N₂ | 290 | 5 | 3 | 30%O₂+70%A r | 1,200 | 12 | 5 | N₂ |
| Embodi ment 7 | Corn starch | 240 | 36 | 3 | N₂ | 320 | 1 | 3 | 30%O₂+70%A r | 1,200 | 12 | 5 | N₂ |
| Embodi ment 8 | Corn starch | 240 | 36 | 3 | N₂ | 350 | 1 | 3 | 30%O₂+70%A r | 1,200 | 12 | 5 | N₂ |
| Embodi ment 9 | Corn starch | 240 | 36 | 3 | N₂ | 300 | 2 | 3 | 40%O₂+60%A r | 1,200 | 12 | 5 | N₂ |
| Embodi ment 10 | Corn starch | 240 | 36 | 3 | N₂ | 300 | 2 | 3 | 50%O₂+50%A r | 1,200 | 12 | 5 | N₂ |
| Embodi ment 11 | Corn starch | 240 | 36 | 3 | N₂ | 300 | 2 | 3 | 80%O₂+20%A r | 1,200 | 12 | 5 | N₂ |
| Embodi ment 12 | Corn starch | 240 | 36 | 3 | N₂ | 300 | 8 | 3 | 30%O₂+70%A r | 1,200 | 12 | 5 | N₂ |
| Embodi ment 13 | Corn starch | 240 | 36 | 3 | N₂ | 300 | 2 | 3 | 30%O₂+70%A r | 1,000 | 12 | 1 | N₂ |
| Embodi ment 14 | Corn starch | 240 | 36 | 3 | N₂ | 300 | 2 | 3 | 30%O₂+70%A r | 1,100 | 12 | 1 | N₂ |
| Embodi ment 15 | Corn starch | 240 | 36 | 3 | N₂ | 300 | 2 | 3 | 30%O₂+70%A r | 1,300 | 8 | 10 | N₂ |
| Embodi ment 16 | Corn starch | 240 | 36 | 3 | N₂ | 300 | 2 | 3 | 30%O₂+70%A r | 1,400 | 6 | 10 | N₂ |
| Embodi ment 17 | Corn starch | 240 | 36 | 3 | N₂ | 300 | 2 | 3 | 30%O₂+70%A r | 1,500 | 4 | 10 | N₂ |
| Embodi ment 18 | Corn starch | 240 | 36 | 3 | N₂ | 300 | 2 | 3 | 30%O₂+70%A r | 1,600 | 1 | 10 | N₂ |
| Embodi ment 19 | Cellulose | 220 | 36 | 3 | N₂ | 300 | 4 | 3 | 30%O₂+70%A r | 1,200 | 12 | 1 | N₂ |
| Embodi ment 20 | Polyanilin e | 220 | 36 | 3 | N₂ | 300 | 4 | 3 | 30%O₂+70%A r | 1,300 | 12 | 1 | N₂ |
| Embodi ment 21 | Polypyrrol e | 220 | 36 | 3 | N₂ | 300 | 4 | 3 | 30%O₂+70%A r | 1,300 | 12 | 1 | N₂ |
| Embodi ment 22 | Phenolic resin | 240 | 36 | 3 | N₂ | 350 | 2 | 3 | 30%O₂+70%A r | 1,400 | 12 | 5 | N₂ |
| Embodi ment 23 | Epoxy resin | 240 | 36 | 3 | N₂ | 350 | 2 | 3 | 30%O₂+70%A r | 1,200 | 12 | 5 | N₂ |
| Compara tive Embodi ment 1 | Corn starch | 240 | 36 | 3 | N₂ | / | / | / | / | 1,200 | 12 | 5 | N₂ |
| Compara tive Embodi ment 2 | Corn starch | 240 | 36 | 3 | Air | / | / | / | / | 1,200 | 12 | 5 | N₂ |
| Compara tive Embodi ment 3 | Corn starch | 240 | 36 | 3 | N₂ | 330 | 2 | 3 | 30%O₂+70%A r | 900 | 4 | 5 | N₂ |

**Table 2**

| No. | Amount of generated CO₂ (mmoL/g) | Amount of generated CO (mmoL/g) | Amount of generated H₂ (mmoL/g) | Gram capacity of hard carbon (mAh/g) | First coulomb efficiency of hard carbon (%) |
|---|---|---|---|---|---|
| Embodiment 1 | 0.742 | 1.328 | 0.952 | 320 | 80.9 |
| Embodiment 2 | 0.632 | 1.208 | 0.637 | 411 | 86.4 |
| Embodiment 3 | 0.682 | 1.314 | 0.661 | 334 | 83.5 |
| Embodiment 4 | 0.893 | 1.617 | 1.215 | 307 | 80.1 |
| Embodiment 5 | 0.572 | 0.941 | 0.585 | 355 | 87.9 |
| Embodiment 6 | 0.621 | 1.174 | 0.635 | 390 | 86.7 |
| Embodiment 7 | 0.672 | 1.274 | 0.655 | 374 | 84.4 |
| Embodiment 8 | 0.704 | 1.320 | 0.718 | 331 | 82.7 |
| Embodiment 9 | 0.628 | 1.189 | 0.636 | 403 | 86.5 |
| Embodiment 10 | 0.667 | 1.258 | 0.647 | 381 | 84.9 |
| Embodiment 11 | 0.677 | 1.298 | 0.739 | 361 | 83.6 |
| Embodiment 12 | 0.657 | 1.243 | 0.642 | 387 | 85.7 |
| Embodiment 13 | 0.679 | 1.306 | 0.851 | 358 | 81.6 |
| Embodiment 14 | 0.676 | 1.293 | 0.647 | 367 | 85.4 |
| Embodiment 15 | 0.604 | 1.164 | 0.639 | 357 | 86.3 |
| Embodiment 16 | 0.504 | 0.896 | 0.618 | 336 | 87.2 |
| Embodiment 17 | 0.411 | 0.804 | 0.517 | 319 | 88.0 |
| Embodiment 18 | 0.328 | 0.637 | 0.426 | 304 | 89.1 |
| Embodiment 19 | 0.859 | 1.528 | 0.654 | 308 | 85.2 |
| Embodiment 20 | 0.661 | 1.258 | 0.714 | 382 | 83.3 |
| Embodiment 21 | 0.640 | 1.237 | 0.983 | 401 | 80.4 |
| Embodiment 22 | 0.629 | 1.195 | 0.978 | 394 | 80.7 |
| Embodiment 23 | 0.972 | 1.748 | 0.659 | 301 | 84.2 |
| Comparative Embodiment 1 | 1.115 | 2.405 | 1.347 | 251 | 77.7 |
| Comparative Embodiment 2 | 1.234 | 2.984 | 1.576 | 264 | 77.0 |
| Comparative Embodiment 3 | 0.908 | 2.327 | 1.638 | 238 | 73.7 |

## Claims

1. A hard carbon, wherein an amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

2. The hard carbon according to claim 1, wherein
the amount of generated CO₂ is detected in thermal programmed desorption-mass spectrum (TPD-MS) to be from 0.2 mmoL/g to 1.0 mmoL/g, optionally 0.4 mmoL/g to 0.8 mmoL/g, when the hard carbon is heated from 50 °C to 1,050 °C; and/or
the amount of generated CO is detected in thermal programmed desorption-mass spectrum (TPD-MS) to be from 0.5 mmoL/g to 2.0 mmoL/g, optionally from 0.8 mmoL/g to 1.4 mmoL/g, when the hard carbon is heated from 50 °C to 1,050 °C.

3. The hard carbon according to claim 1 or 2, wherein an amount of generated H₂ is detected in thermal programmed desorption-mass spectrum (TPD-MS) to be less than or equal to 1.0 mmoL/g, optionally from 0.5 mmoL/g to 1.0 mmoL/g, when the hard carbon is heated from 50 °C to 1,050 °C.

4. The hard carbon according to any one of claims 1-3, wherein, based on a total mass of the hard carbon,
a percentage mass content of C element in the hard carbon is from 95% to 98%; and/or
a percentage mass content of O element in the hard carbon is less than or equal to 5%; and/or
a percentage mass content of H element in the hard carbon is less than or equal to 0.4%; and/or
a percentage mass content of N element in the hard carbon is less than or equal to 0.4%; and/or
a sum of the percentage mass content of the C element, the O element, the H element, and the N element in the hard carbon is from 99.0% to 99.8%.

5. The hard carbon according to any one of claims 1-4, wherein, in a Raman spectrum of the hard carbon, I_{d}/I_{g} is from 1.2 to 1.3, wherein I_{d} represents d peak intensity of a Raman shift in a range of 1,350±50 cm⁻¹, and I_{g} represents g peak intensity of the Raman shift in a range of 1,580±50 cm⁻¹.

6. The hard carbon according to any one of claims 1-5, wherein, in an X-ray diffraction pattern of the hard carbon, a 2θ value corresponding to peak 002 is between 22° and 24°.

7. The hard carbon according to any one of claims 1-6, wherein the hard carbon satisfies at least one of following conditions (1) to (5):
(1) a volumetric particle size Dv50 of the hard carbon is from 2 µm to 15 µm, optionally from 4 µm to 8 µm;
(2) a volumetric particle size Dv90 of the hard carbon is from 5 µm to 25 µm, optionally from 8 µm to 15 µm;
(3) a specific surface area of the hard carbon is less than or equal to 5 m²/g, optionally from 0.5 m²/g to 5 m²/g;
(4) a powder compaction density of the hard carbon under a force of 50,000 N is from 0.96 g/cm³ to 1.05 g/cm³; and
(5) a tap density of the hard carbon is from 0.80 g/cm³ to 0.95 g/cm³.

8. A method for preparing a hard carbon, comprising following steps:
S10: providing a carbon source;
S20: heat treating the carbon source in an inert atmosphere at a first temperature T1 for a duration of t1 to obtain a first intermediate product;
S30: heat treating the resulting first intermediate product in an oxygen-containing atmosphere with an oxygen volume fraction greater than or equal to 25% at a second temperature T2 for a duration of t2 to obtain a second intermediate product; and
S40: carbonizing the resulting second intermediate product in an inert atmosphere at a third temperature T3 for a duration of t3 to obtain the hard carbon,
wherein an amount of generated CO₂ is detected in thermal programmed desorption-mass spectrum (TPD-MS) to be less than or equal to 1.0 mmoL/g and an amount of generated CO is detected in thermal programmed desorption-mass spectrum to be less than or equal to 2.0 mmoL/g, when the hard carbon is heated from 50 °C to 1,050 °C.

9. The method according to claim 8, wherein
T1<T3, and T2<T3; and optionally, T1≤T2.

10. The method according to claim 8 or 9, wherein
T1≤300 °C, and optionally, T1 is from 180 °C to 300 °C; and/or
T2<400 °C, and optionally, T2 is from 270 °C to 380 °C; and/or
T3 is from 1,000 °C to 1,600 °C, and optionally, T3 is from 1,000 °C to 1,400 °C.

11. The method according to any one of claims 8-10, wherein
t1 is from 4 h to 60 h; and/or
t2 is from 1 h to 12 h; and/or
t3 is from 1 h to 12 h.

12. The method according to any one of claims 8-11, wherein the oxygen volume fraction in the oxygen-containing atmosphere is from 25% to 100%, optionally from 30% to 80%.

13. The method according to any one of claims 8-12, wherein the inert atmosphere is selected from one or more of a nitrogen atmosphere and an argon atmosphere.

14. The method according to any one of claims 8-13, wherein the preparation method further comprises at least one of following steps (a) to (b):
(a) further comprising: S21: crushing the first intermediate product obtained in S20, after S20 and prior to S30; and
(b) further comprising: S31: crushing the second intermediate product obtained in S30, after S30 and prior to S40, wherein, optionally, a volumetric particle size of the second intermediate product after crushing satisfies: Dv50 is from 2 µm to 15 µm, and/or, Dv90 is from 5 µm to 25 µm.

15. The method according to any one of claims 8-14, wherein
the carbon source includes one or more of a polymer, a resin, and a biomass material;
optionally, the polymer includes one or more of polyaniline and polypyrrole;
optionally, the resin includes one or more of a phenolic resin and an epoxy resin; and
optionally, the biomass material includes one or more of starch, glucose, fructose, maltose, sucrose, cellulose, hemicellulose, and lignin, and optionally, the starch includes one or more of cereal starch, tuber starch, and bean starch.

16. A secondary battery, comprising a negative electrode sheet, the negative electrode sheet comprising the hard carbon according to any one of claims 1-7 or the hard carbon prepared in accordance with the method according to any one of claims 8-15.

17. An electrical apparatus, comprising the secondary battery according to claim 16.
